# EUROPEAN PATENT APPLICATION

(11) **EP 4 667 545 A1**
(43) Date of publication of application: **24.12.2025**
(21) Application number: 24305989.6
(22) Date of filing: 21.06.2024
(51) Int. Cl.: C09J 4/00, C08F 122/32, C08F 2/50

(54) **PHOTOCURABLE COMPOSITION**

(71) Applicant: Bostik SA, 92800 Puteaux (FR)
(72) Inventor: GARRA, Patxi, 08193 BELLATERRA, BARCELONA (ES); FAGGI, Enrico, 08193 BELLATERRA, BARCELONA (ES); PÉREZ DORADO, Eva, 08193 BELLATERRA, BARCELLONA (ES)
(74) Representative: Arkema Patent

(57) **Abstract**

The present invention relates to a photocurable composition comprising:
- a phosphine oxide-based photoinitiator P having a molecular weight higher than or equal to 500 g/mol;
- a cyanoacrylate; and
- a metallocene compound.

## Description

### FIELD

The present invention relates to a photocurable composition comprising a photoinitiator, a metallocene compound and a cyanoacrylate.

The present invention also relates to the use of the composition as adhesive, coating, sealant.

### BACKGROUND

Radiation curable compositions (photocurable compositions) containing cyanoacrylate can be polymerized by exposure to radiation, such as for example ultraviolet (UV) light. For rapid and effective curing, a photoinitiator is often used. The photoinitiator forms radical species upon irradiation with photons and initiates free-radical polymerization of unsaturated groups, leading to hardening (curing) of the material.

Free radical photoinitiators can adopt two different modes of action, and are classified by mode of action as Norrish Type I and Norrish Type II Photoinitiators. Norrish Type I photoinitiators cleave upon exposure to radiation, producing radical species which are capable of initiating the polymerization of unsaturated compounds. Norrish Type II photoinitiators are compounds which do not fragment upon exposure to radiation and so will not typically initiate radical-chain polymerization unless a co-initiator is present. Upon exposure to radiation, interaction between the Type II photoinitiator and the co-initiator leads to the generation of radical species which can initiate the polymerization of UV-curable resins.

Phosphine oxide derivatives such as acylphosphine oxides are typical photoinitiators in photocurable cyanoacrylate formulations. Acylphosphine oxides are classified as Norrish Type I initiators and include the following compounds:
(a) Laromer 819 (also known as Irgacure, 819, Speedcure BPO, or BAPO, namely bis-(2,4,6-trimethylbenzoyl)phenyl phosphine oxide) which has the following structure: 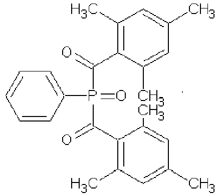
(b) Speedcure TPO (also known as 2,4,6- trimethylbenzoyl diphenyl phosphine oxide) which has the following structure: 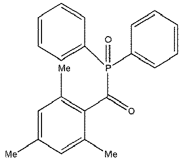
(c) Speedcure TPO-L (also known as Ethyl (2,4,6-trimethylbenzoyl)phenyl phosphinate) which has the following structure:

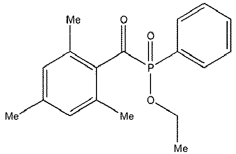

However, TPO has recently been classified as a Class 1B Reprotoxin based on new toxicology testing. This limits its use in many applications. TPO-L and BAPO are expected to be similarly re-classified.

In addition, mesitaldehyde (2,4,6-trimethylbenzaldehyde), which is a compound normally released from TPO under UV light, can migrate from the cured product and contaminate any adjacent materials. In the case of foodstuffs, migration of small molecule fragments can lead to problems with off-taste and odour. Furthermore, mesitaldehyde is classed as a skin irritant, so migration from cured articles may pose a health hazard. Low molecular-weight photoinitiators such as TPO, TPO-L and BPO may also migrate from the cured products and can also pose a hazard to health. High molecular weight polymeric photoinitiators thus appear more advantageous as they do not generate small molecular photoproducts and hence pose less toxicological concern.

Besides, photocurable compositions based on cyanoacrylate and germanium compounds are also known. Their synthesis is costly from expensive starting materials with difficult purification (using column chromatography) making them not practical or economical to produce at scale. It also raises some concerns about toxicity.

There exist also some issues with current photocurable compositions based on cyanoacrylate such as for example: slow photocuring times, lack of stability with time (increase of viscosity over the time), lack of resistance to temperature and acidic conditions, nucleophilicity of the photoinitiator or its acidolysis byproducts), high energy involved in photocuring, ...

There is still a need for new photocurable compositions which allows remediating at least part of the mentioned drawbacks.

More particularly, there is thus a need for cost effective and efficient photocurable compositions that present high curing activity, lower toxicity and reduced migration from coated articles.

More particularly, there is a need for new photocurable compositions that exhibit high curing activity, lower toxicity, high stability over time (for example constant viscosity with time).

### DESCRIPTION OF THE INVENTION

### Definitions

The term "*alkyl*" means a monovalent saturated alicyclic hydrocarbon group of formula - CₙH₂ₙ₊₁ wherein n is 1 to 20. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term "*aryl*" means an optionally substituted polyunsaturated aromatic group. The aryl may contain a single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). The term "*aryl*" also encompasses partially hydrogenated derivatives of the carbocyclic system is described above. Examples include phenyl, naphtyl, biphenyl, phenanthrenyl and naphthacenyl.

The term "*arylene*" means a substituent that derives from an aromatic hydrocarbon (arene) and is bivalent.

The term "*halogen*" means an atom selected from C!, Br, F and I.

The term "*cycloalkyl*" means a monovalent saturated alicyclic hydrocarbon group comprising a cycle. Examples of cycloalkyl groups include cyclopentyl, cyclohexyl and isobornyl.

The term "*heterocycloalkyl*" means a cycloalkyl having at least one ring atom that is a heteroatom selected from O, N or S.

The term "*alkoxy*" means a group of formula -O-alkyl, wherein the alkyl is as defined above. The term "*aryloxy*" means a group of formula -O-aryl, wherein the aryl is as defined above. The term "*thioalkyl*" means a group of formula -S-alkyl, wherein the alkyl is as defined above. The term "*thioaryl*" means a group of formula -S-aryl, wherein the aryl is as defined above.

The term "*linker*" means a plurivalent group. A linker may connect at least two moieties of a compound together, in particular 2 to 16 moieties of a compound together. For example, a linker that connects two moieties of a compound together is referred to as a divalent linker, a linker that connects three moieties of a compound together is referred to as a trivalent linker, etc....

The term "*hydrocarbon linker*" means a linker having a carbon backbone chain which may optionally be interrupted by one or more heteroatoms selected from N, O, S, Si and mixtures thereof. A hydrocarbon linker may be aliphatic, cycloaliphatic or aromatic. A hydrocarbon linker may be saturated or unsaturated. A hydrocarbon linker may be optionally substituted.

The term "*aliphatic*" means a non-aromatic acyclic compound. It may be linear or branched, saturated or unsaturated. It may be substituted by one or more groups, for example selected from alkyl, hydroxyl, halogen (Br, Cl, I, F), isocyanate, carbonyl, amine, carboxylic acid, - C(=O)-OR', -C(=O)-O-C(=O)-R', each R' being independently a C₁-C₆ alkyl. It may comprise one or more bonds selected from ether, ester, amide, urethane, urea and mixtures thereof.

The term "*acyclic*" means a compound that does not comprise any rings.

The term "*cycloaliphatic*" means a non-aromatic cyclic compound. It may be substituted by one or more groups as defined for the term "*aliphatic*"*.* It may comprise one or more bonds as defined for the term "*aliphatic*"*.*

The term "*aromatic*" means a compound comprising an aromatic ring, which means that respects Hückel's aromaticity rule, in particular a compound comprising a phenyl group. It may be substituted by one or more groups as defined for the term "*aliphatic*"*.* It may comprise one or more bonds as defined for the term "*aliphatic*"*.*

The term "*saturated*" means a compound that does not comprise any double or triple carbon-carbon bonds.

The term "*unsaturated*" means a compound that comprises a double or triple carbon-carbon bond, in particular a double carbon-carbon bond.

The term "*polyether polyol*" or "*polyether linker*" means a polyol (in other words a compound comprising at least two hydroxyl groups), respectively a linker, comprising at least two ether bonds.

The term "*polyester polyol*" or "*polyester linker*" means a polyol, respectively a linker, comprising at least two ester bonds.

The term "*polycarbonate polyol*" or "*polycarbonate linker*" means a polyol, respectively a linker, comprising at least two carbonate bonds.

The term "*polyurethane linker*" means a linker comprising at least two urethane bonds.

The term "*polyorganosiloxane polyol*" or "*polyorganosiloxane linker*" means a polyol, respectively a linker, comprising at least two organosiloxane bonds. The organosiloxane may, for example be a dimethylsiloxane bond.

The term "*polycaprolactone polyol*" or "*polycaprolactone linker*" means a polyol, respectively a linker, comprising at least two units derived from the ring-opening polymerization of ε-caprolactone, in particular at least two -[(CH₂)₅-C(=O)O]- units.

The term "*polybutadiene polyol*" or "*polybutadiene linker*" means a polyol, respectively a linker, comprising at least two units derived from the polymerization of butadiene, in particular at least two units selected from -CH₂-CH=CH-CH₂- and CH₂-CH(CH=CH₂)-.

The term "*isocyanate group*" means a -N=C=O group.

The term "*isocyanurate linker*" means a linker comprising an isocyanurate moiety, in particular a moiety of formula:

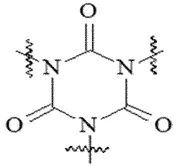

### Photocurable composition

The present invention relates to a photocurable composition comprising:
- a phosphine oxide-based photoinitiator P having a molecular weight higher than or equal to 500 g/mol;
- a cyanoacrylate; and
- a metallocene compound.

### Cyanoacrylate

As used herein, the term "cyanoacrylate" refers to an organic compound which contains a carbon-carbon double bond, wherein one carbon atom involved in the carbon-carbon double bond is substituted with a cyano (-CN) group and an ester group.

Cyanoacrylate may be mono-functional cyanoacrylate, multi-functional cyanoacrylate including bifunctional cyanoacrylate, hybrid cyanoacrylate, and mixtures thereof.

Cyanoacrylate may be cyanoacrylate monomer, oligomer or polymer. Preferably, the cyanoacrylate is a cyanoacrylate monomer.

Hybrid cyanoacrylate are cyanoacrylate comprising at least one additional moiety other than a cyanoacrylate moiety, preferably with the capacity to polymerize or react from the additional moiety e.g. monomers comprising a cyanoacrylate moiety and a (meth)acrylate moiety, or monomers comprising a cyanoacrylate moiety and a isocyanate moiety.

Monofunctional cyanoacrylate are well known in the art. See for example the review entitled "Adhesives Technology Handbook" by from S. Ebnesajjad Ed., William Andrew, Norwich (2008).

Monofunctional cyanoacrylate has preferably the chemical formula (I): 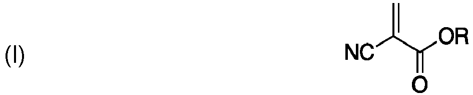 wherein R may be selected from the group consisting of an alkyl group, an alkoxyalkyl group, a trimethylsilylated C1-C3 alkyl group, a cycloalkyl group, an allyl group, an aralkyl group, an aryl group, a haloalkyl group.

The alkyl group, the alkoxyalkyl group, the trimethylsilylated C1-C3 alkyl group, or the allyl group, haloalkyl group may be linear or branched.

The alkyl group, the alkoxyalkyl group, the trimethylsilylated C1-C3 alkyl group, the cycloalkyl group, the allyl group, the aralkyl group, the aryl group, the haloalkyl group may be substituted or unsubstituted.

The alkyl group may be selected from the group consisting of methyl, ethyl, n-propyl, iso-propyl, n-butyl, sec-butyl, iso-butyl, tert-butyl, n-pentyl, 1-methylbutyl, 1-ethylpropyl, neopentyl, n-hexyl, 1-methylpentyl, n-heptyl, n-octyl, 2-octyl, 2-ethylhexyl, n-nonyl, n-decyl, n-undecyl, n-dodecyl, n-octadecyl, and mixtures thereof.

If present, the alkoxy group is selected from the group consisting of methoxy, ethoxy, propyloxy, butyloxy, pentyloxy or hexyloxy. The alkoxyalkyl cyanoacrylate may be selected from the group consisting of 2-methoxyethyl, 2-ethoxyethyl, 2-(1-methoxy)propyl, 2-(2'-methoxyethyl)-methoxyethyl, 2-(2'-methoxy)-ethoxyethyl, 2-(2'-ethoxy)-ethoxyethyl, 2-(2'-propyloxy)-ethoxyethyl, 2-(2'-butoxy)-ethoxyethyl, 2-(2'-pentyloxy)-ethoxyethyl, 2-(2'-hexyloxy)-ethoxyethyl, 2-(2'-methoxy)-propyloxypropyl, 2-(2'-ethoxy)-propyloxypropyl, 2-(2'-propyloxy)-propyloxypropyl, 2-(2'-butyloxy)-propyloxypropyl, 2-(2'-pentyloxy)-propyloxypropyl, 2-(2'-hexyloxy)-propyloxypropyl, 2-(2'-methoxy)-butyloxybutyl, 2-(2'-ethoxy)-butyloxybutyl, 2-(2'-butyloxy)-butyloxybutyl, 2-(3'-methoxy)-propyloxyethyl, 2-(3'-methoxy)-butyloxyethyl, 2-(3'-methoxy)-propyloxypropyl, 2-(3'-methoxy)-butyloxypropyl, 2-(2'-methoxy)-ethoxypropyl, 2-(2'-methoxy)-ethoxybutyl, and mixtures thereof.

Multifunctional cyanoacrylate, including bifunctional cyanoacrylate, are for example disclosed in the article entitled "Unequivocal Synthesis of Bis(2-cyanoacrylate) Monomers. Via Anthracene Adduct" by C. Buck, J. Polymer Sci, Polym. Chem Edition, Vol 16, 2475, (1978).

Bifunctional cyanoacrylates have preferably the chemical formula (II): 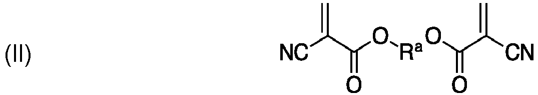 wherein R^{a} is selected from the group consisting of -(CH₂)ₙ with n = 2 to 12, - CH₂(C(CH₃)₂CH₂)-, -CH(CH₃)CH₂CH₂CH(CH₃)-, -CH₂C₆H₄CH₂- including 1,3- or 1,4-disubstituted aromatic), -(CH₂)₄O(CH₂)₄-, -CH₂(CF₂)₃CH₂-, -CH₂Si(CH₃)₂OSi(CH₃)₂CH₂-, - CH₂CH=CHCH₂- or -CH₂C=CCH₂-.

Hybrid-functional cyanoacrylates, or simply hybrid cyanoacrylate' monomers may have the chemical formula (III) or (IV) wherein: 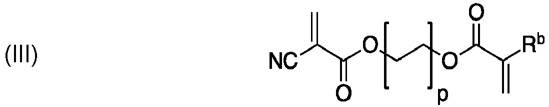 wherein R^{b} is -H or -CH₃; and wherein p is 1; 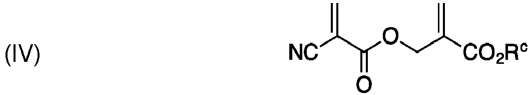 wherein R^{c} is -CH₃ or -C₂H₅.

The cyanoacrylate may be selected from the group consisting of monomers of structure (I), monomers of structure (II), monomers of structure (III), monomers of structure (IV), and mixtures thereof.

The cyanoacrylate may be selected from the group consisting of methyl cyanoacrylate, ethyl cyanoacrylate, n-propyl cyanoacrylate, iso-propyl cyanoacrylate, *n*-butyl cyanoacrylate, *sec*-butyl cyanoacrylate, iso-butyl cyanoacrylate, tert-butyl cyanoacrylate, *n*-pentyl cyanoacrylate, 1-methylbutyl cyanoacrylate, 1-ethylpropyl cyanoacrylate, neopentyl cyanoacrylate, *n*-hexyl cyanoacrylate, 1-methylpentyl cyanoacrylate, *n*-heptyl cyanoacrylate, *n*-octyl cyanoacrylate, 2-octyl cyanoacrylate, 2-ethylhexyl cyanoacrylate, *n*-nonyl cyanoacrylate, *n*-decyl cyanoacrylate, *n*-undecyl cyanoacrylate, *n*-dodecyl cyanoacrylate, n-octadecyl cyanoacrylate, allyl cyanoacrylate, cyclohexyl cyanoacrylate, 2-methoxyethyl cyanoacrylate, 2-ethoxyethyl cyanoacrylate, phenoxyethyl cyanoacrylate, 2-(1-alkoxy)propyl cyanoacrylate (for example 2-(1-methoxy)propyl cyanoacrylate), 2-(2'-alkoxy)-methoxyethyl-2"-cyanoacrylate (for example 2-(2'-methoxy)-methoxyethyl-2"-cyanoacrylate), 2-(2'-alkoxy)-ethoxyethyl-2"-cyanoacrylate (for example 2-(2'-methoxy)-ethoxyethyl-2"-cyanoacrylate, 2-(2'-ethoxy)-ethoxyethyl-2"-cyanoacrylate, 2-(2'-propyloxy)-ethoxyethyl-2"-cyanoacrylate, 2-(2'-butoxy)-ethoxyethyl-2"-cyanoacrylate, 2-(2'-pentyloxy)-ethoxyethyl-2"-cyanoacrylate or 2-(2'-hexyloxy)-ethoxyethyl-2"-cyanoacrylate), 2-(2'-alkoxy)-propyloxypropyl-2"-cyanoacrylate (for example 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl- 2"-cyanoacryl ate, 2-(2'-pentyloxy)-propyloxypropyl-2"-cyanoacrylate, 2-(2'-hexyl oxy)-propyloxypropyl-2"-cyanoacrylate), 2-(2'-alkoxy)-butyloxybutyl-2"-cyanoacrylate (for example 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate), 2-(3'-alkoxy)-propyloxyethyl-2"-cyanoacrylate for example 2-(3'-methoxy)-propyloxyethyl-2"-cyanoacrylate), 2-(3'-alkoxy)-butyloxyethyl-2"-cyanoacrylate (for example 2-(3'- methoxy)-butyloxyethyl-2"-cyanoacrylate), 2-(3'-alkoxy)-propyloxypropyl-2"-cyanoacrylate (for example 2-(3'-methoxy)-propyloxypropyl-2"-cyanoacrylate), 2-(3'-alkoxy)-butyloxypropyl-2"-cyanoacrylate (for example 2-(3'-methoxy)-butyloxypropyl-2"-cyanoacrylate 2-(2'-alkoxy)-ethoxypropyl-2"-cyanoacrylate (for example 2-(2'-methoxy)-ethoxypropyl-2"-cyanoacrylate), 2-(2'-alkoxy)-ethoxybutyl-2"-cyanoacrylate (for example 2-(2'-methoxy)-ethoxybutyl-2"-cyanoacrylate), trimethylsilyethyl cyanoacrylate, trimethylsilypropyl cyanoacrylate, trimethylsilyloxyethyl cyanoacrylate triethylsilyloxyethyl cyanoacrylate, phenylethyl cyanoacrylate, and mixtures thereof.

Preferably, the cyanoacrylate is a mono-functional cyanoacrylate, more preferably selected from the group consisting of 2-methoxyethyl cyanoacrylate, methyl cyanoacrylate, ethyl cyanoacrylate, n-butyl cyanoacrylate, n-heptyl cyanoacrylate, n-octyl cyanoacrylate, iso-propyl cyanoacrylate or mixtures thereof.

Even more preferably, the cyanoacrylate is 2-methoxyethyl cyanoacrylate or ethyl cyanoacrylate.

The photocurable composition preferably comprises from 60% to 99.5% by weight of cyanoacrylate(s), more preferably from 70% to 99% by weight of cyanoacrylate(s), and even more preferably from 80% to 97% by weight of cyanoacrylate(s) based on the total weight of the photocurable composition.

### Metallocene compound

The metallocene compound may be selected from the group consisting of ferrocene compounds, ruthenocene compounds, bis(cyclopentadieneyl) osmium compounds, their derivatives thereof, and mixtures thereof.

Preferably, the metallocene compound is selected from ferrocene compounds, its derivatives, and mixtures thereof.

The metallocene compound is preferably the ferrocene compound of formula (V): 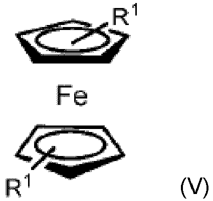 wherein R¹ is a hydrogen or a C1-C4 alkyl group, and wherein one or more R¹ are present in one or both rings. Suitable ferrocene compounds are for example disclosed in US 5824180 and US6503959.

Preferably, in the ferrocene compound of formula (V), R¹ is hydrogen.

The photocurable composition preferably comprises from 50 ppm to 500 ppm by weight of metallocene compound based on the total weight of the photocurable composition.

### Photoinitiator P

The photocurable composition comprises a phosphine oxide-based photoinitiator P having a molecular weight higher than or equal to 500 g/mol.

Preferably, the phosphine oxide-based photoinitiator P has a molecular weight higher than or equal to 1 000 g/mol.

More preferably, the phosphine oxide-based photoinitiator P has a molecular weight higher than or equal to 1 000 g/mol, and lower than or equal to 3 000 g/mol.

Molecular weight IUPAC definition is the Ratio of the mass of a molecule to the unified atomic mass unit (Green Book, 2nd ed., p. 41 PAC, 1996, 68, 957 (Glossary of terms in quantities and units in Clinical Chemistry (IUPAC-IFCC Recommendations 1996)) on page 990).

Molecular weight can, for example, be measured by Mass spectrometry.

Preferably, the phosphine oxide-based photoinitiator P has one of formula (1) or (1') 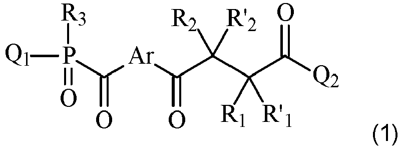 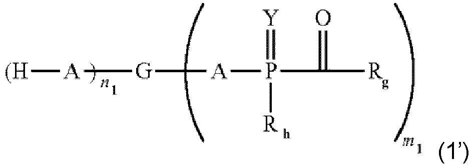 wherein :
- Ar, R₁, R'₁, R₂, R'₂, R₃, Q₁, Q₂ are as defined herein, and
- each A represents independently of one another O, S, NRₓ;
- Rₓ is hydrogen or C1-C4 alkyl;
   G is a residue of the multifunctional compound (core) G-(A-H)ₙ₁₊ₘ₁, wherein each A-H represents a alcoholic or amino or thiol group;
- n₁ and m₁ are both integer numbers and n₁+m₁ is comprised between 3 and 10; m₁ is comprised between 3 and 8;
- R_{g}, Rₕ are independently of one another, C1-C18 alkyl, C5-C12 aryl and C5-C12 cycloalkyl, each of which is uninterrupted or interrupted by one or more oxygen and/or sulfur atoms and/or one or more substituted or unsubstituted imino groups, or are a five- to six-membered heterocyclic radical containing oxygen and/or nitrogen and/or sulfur atoms, where each of said radicals may be substituted by aryl, alkyl, aryloxy, alkoxy, heteroatoms and/or heterocyclic radicals;
- Rₕ may also be R_{g}-(C=O)- ;
- Y is O ;
with the proviso that photoinitiator of formula (1') does not contain photocurable ethylenically unsaturated groups.

A preferred compound of formula (1') is as follows: 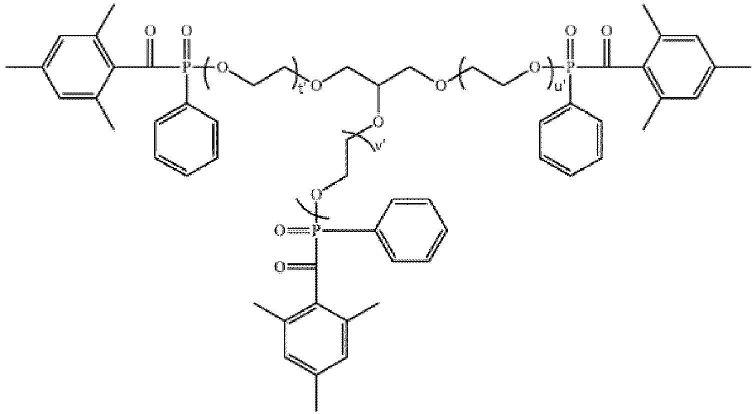 wherein t', u', v' are integers ranging from 1 to 10 with the proviso that the sum t'+u'+v' varies from 1 to 20.

Commercially available compound of formula (1') is for example Omnipol TP marketed by IGM resins.

More preferably, the photoinitiator P has formula (1).

In formula (1), each Ar is independently an optionally substituted arylene. In particular, each Ar may independently be an optionally substituted phenylene. The phenylene may be an ortho-phenylene, a meta-phenylene or a para-phenylene (substituted or not). The ortho, meta and para position refer to the position of the radicals of the bivalent phenylene. Preferably, each Ar may independently be a meta-phenylene substituted by one or more optionally substituted groups selected from alkyl, aryl, alkoxy, aryloxy, thioalkyl and thioaryl. More preferably, each Ar is a group of formula (2):

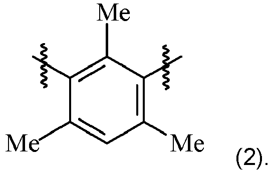

In formula (1), R₁ and R₂ are independently H or an optionally substituted group selected from alkyl and aryl; or R₁ and R₂, together with the carbon atoms to which they are attached, form a ring. Such ring may be chosen from 5-8-membered ring, for example a 5-membered ring, a 6-membered ring, a 7-membered ring, or an 8-membered ring, and may preferably be a 6-membered ring. Such ring (preferably 6-membered) is preferably a cycloaliphatic ring. In particular, R₁ and R₂ may both be H or R₁ and R₂, together with the carbon atoms to which they are attached, may form a six-membered ring, preferably a six-membered cycloaliphatic ring. Preferably, R₁ and R₂ are both H.

In formula (1), one of R'₁ and R'₂ is H and the other of R'₁ and R'₂ is selected from -OR⁴, -SR⁵, -NR⁶R⁷, -C(R⁸)(CO-W¹-R⁹)(CO-W²-R¹⁰), -C(R¹¹)(CO-W³-R¹²)(CN) and -C(R¹³)(CN)₂; or R'₂ is H and R'₁ and Q₂, together with the atoms to which they are attached, form a 5-7 membered ring;
wherein:
- R⁴, R⁵, R⁶ and R⁷ are independently H or an optionally substituted group selected from alkyl, a polyoxyalkylene, cycloalkyl, heterocycloalkyl, aryl and heteroaryl; or R⁶ and R⁷, together with the nitrogen atom to which they are attached, form a 5-7 membered ring;
- R⁸, R¹¹ and R¹³ are independently H or an optionally substituted alkyl group, preferably H;
- R⁹, R¹⁰ and R¹² are independently an optionally substituted group selected from alkyl, cycloalkyl, heterocycloalkyl, aryl and heteroaryl, or R⁹ and R¹⁰, together with the atoms to which they are attached, form a 5-7 membered ring,
- W¹, W² and W³ are independently selected from a bond or an oxygen atom.

Preferably, one of R'₁ and R'₂ is H and the other of R'₁ and R'₂ is -C(R⁸)(CO-W¹-R⁹)(CO-W²-R¹⁰). In such a case, R⁸, R⁹, R¹⁰, W¹ and W² are preferably as defined below:
- R⁸ is H;
- W¹ and W² are independently a bond or an oxygen atom; and
- R⁹ and R¹⁰ are independently an optionally substituted alkyl.

In formula (1), each R₃ is independently an optionally substituted group selected from alkyl, aryl and alkoxy. In particular, each R₃ may independently be an optionally substituted phenyl, methoxy or ethoxy. Preferably, each R₃ is independently phenyl or ethoxy.

In formula (1), Q₁ is an optionally substituted aryl or a group of formula (3): 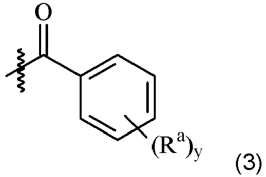 wherein:
- each R^{a} is independently an optionally substituted group selected from alkyl, aryl, alkoxy, aryloxy, thioalkyl and thioaryl; and
- y is a number chosen from 0 to 5.

According to a preferred embodiment, Q₁ is phenyl.

In formula (1), Q₂ is -OR¹⁴, -SR¹⁵, -NR¹⁶R¹⁷, -O-[CH₂-CH(OH)-Y₁]ₐ-Z¹, -S-Z², -N(R¹⁸)-Z³ or -O-Cyhex-Y₂-Z⁴; or Q₂ and R'₁, together with the atoms to which they are attached, form a 5-7 membered ring; wherein:
- R¹⁴ and R¹⁵ are independently H or an optionally substituted group selected from alkyl, cycloalkyl, heterocycloalkyl, aryl and heteroaryl;
- R¹⁶, R¹⁷ and R¹⁸ are independently H, or an optionally substituted group selected from alkyl and aryl; or R¹⁶ and R¹⁷, together with the nitrogen atom to which they are attached, form a 5-7 membered ring;
- Cyhex is a cycloyhexylene substituted by a hydroxyl group, preferably represented by the following formula: 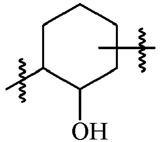
- Y₁ is a bond, -CH₂-O-* or -CH₂-C(=O)-O-*;
- Y₂ is a bond, -CH₂-O-C(=O))-^{#} or -C(=O)-O-^{#};
- a is 0 or 1;
- Z¹, Z², Z³ and Z⁴ are independently a phosphine oxide-containing moiety;
- the symbol * represents a point of attachment to moiety Z¹;
- the symbol ^{#} represents a point of attachment to moiety Z⁴.

In one embodiment, Q₂ is -OR¹⁴. In such a case, R¹⁴ is preferably an optionally substituted alkyl, more preferably methyl or ethyl.

In another embodiment, Q₂ is -O-[CH₂-CH(OH)-Y₁]ₐ-Z¹. In such a case Z¹ is preferably a group of formula (5); 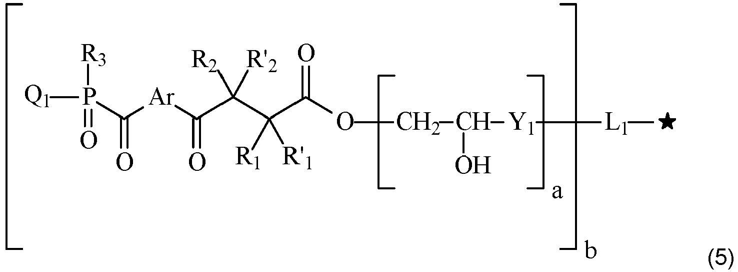 wherein:
- Ar, Y₁, R₁, R₂, R'₁, R'₂, R₃, Q₁ and a are as defined above;
- L₁ is a linker; and
- b is a number chosen from 1 to 15 in particular from 1 to 5, more particularly from 1 to 3.

In formula (5), a may be equal to 0. Alternatively, in formula (5), a may be equal to 1 and Y₁ is preferably a bond or -CH₂-O-*, more preferably -CH₂-O-*.

In another embodiment, Q₂ is -SR¹⁵. In such a case, R¹⁵ is preferably an optionally substituted alkyl.

In another embodiment, Q₂ is -S-Z². In such a case, Z² is preferably a group of formula (6): 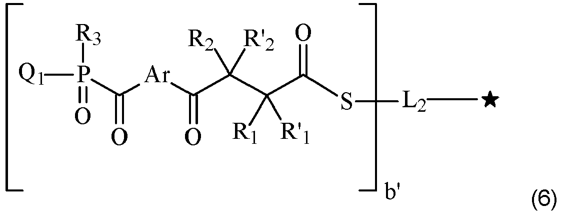 wherein:
- Ar, R₁, R₂, R'₁, R'₂, R₃, and Q₁ are as defined above;
- L₂ is a linker; and
- b' is a number chosen from 1 to 15, in particular from 1 to 5, more particularly from 1 to 3.

In another embodiment, Q₂ is -NR¹⁶R¹⁷. In such a case, R¹⁶ and R¹⁷ are preferably independently selected from H or an optionally substituted group selected from alkyl and aryl. Alternatively, R¹⁶ and R¹⁷, together with the nitrogen atom to which they are attached, may form a 5-7 membered ring.

In another embodiment, Q₂ is -N(R¹⁸)-Z. In such a case, R¹⁸ is preferably H or an optionally substituted group selected from alkyl and aryl; and Z³ is preferably a group of formula (7): 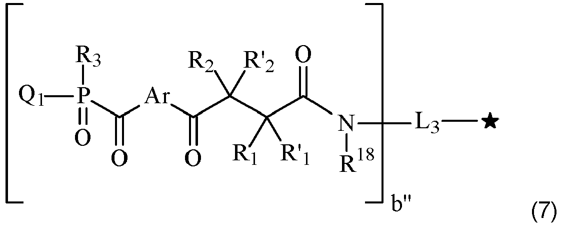 wherein:
- Ar, R₁, R₂, R'₁, R'₂, R₃, R¹⁸ and Q₁ are as defined above;
- L₃ is a linker; and
- b" is a number chosen from 1 to 15, in particular from 1 to 5, more particularly from 1 to 3.

In another embodiment, Q₂ is -O-Cyhex-Y₂-Z⁴. In such a case, Z⁴ is preferably a group of formula (5) as defined above or a group of formula (8); 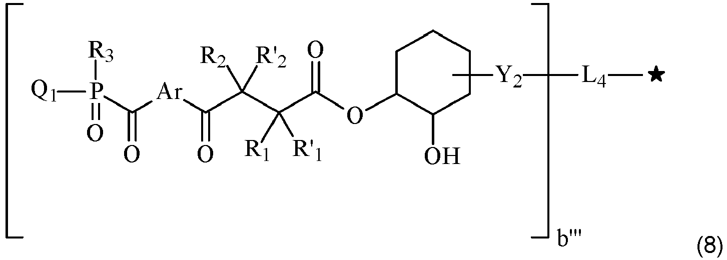 wherein :
- Ar, Y₂, R₁, R₂, R'₁, R'₂, R₃, Q₁ are as defined above;
- L₄ is a linker; and
- b‴ is a number chosen from 1 to 15, in particular from 1 to 5, more particularly from 1 to 3.

Preferably, Q₂ is -O-[CH₂-CH(OH)-Y₁]ₐ-Z¹ as defined above.

In formulae (5), (6), (7) and (8), each linker L₁, L₂, L₃ and L₄ may independently be a divalent, trivalent, tetravalent, pentavalent, hexavalent, heptavalent, octavalent, nonavalent, decavalent, undecavalent, dodecavalent, tridecavalent, tetradecavalent, pentadecavalent or hexadecavalent linker. More particularly, each linker L₁, L₂, L₃ and L₄ may independently be a divalent, trivalent, tetravalent, pentavalent or hexavalent linker. Even more particularly, each linker L₁, L₂, L₃ and L₄ may independently be a divalent, trivalent or tetravalent linker.

Each linker L₁, L₂, L₃ and L₄ may independently be selected from an aromatic linker, an aliphatic linker, a cycloaliphatic linker, a polyether linker, a polythioether linker, a polyalkylene imine linker, a polyester linker, a polycarbonate linker, a polycaprolactone linker, a polyurethane linker, a polyorganosiloxane linker, a polybutadiene linker, and combinations thereof. Preferably, each linker L₁, L₂, L₃ and L₄ is independently selected from an aromatic linker, an aliphatic linker, a cycloaliphatic linker, a polyether linker, a polythioether linker, a polyalkylene imine linker, a polyester linker and combinations thereof.

Each linker L₁, L₂, L₃ and L₄ may independently be selected from:
- a trivalent moiety corresponding to formula (9): 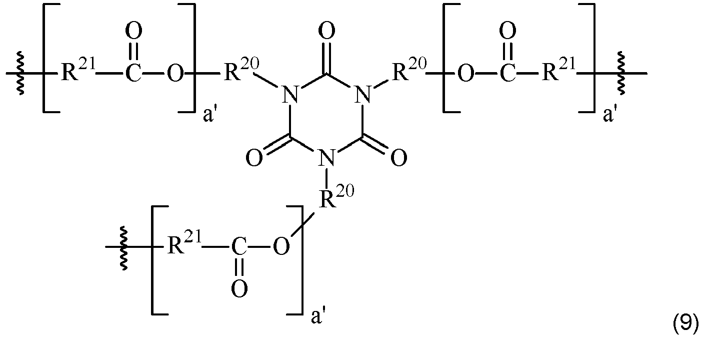 wherein:
   - R²⁰ and R²¹ are independently a linear or branched alkylene;
   - a' is an integer equal to 0 or 1;
- a trivalent moiety corresponding to formula (10): 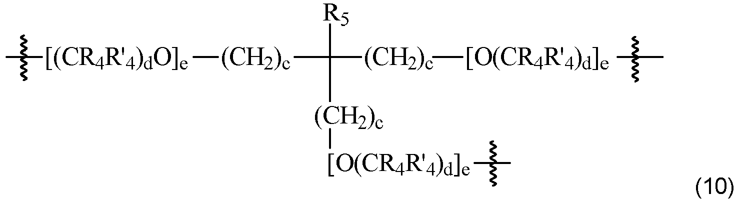 wherein:
   - R₄ and R'₄ are independently H or methyl;
   - R₅ is H, alkyl or alkoxy, preferably R₅ is alkyl;
   - each c is independently an integer from 0 to 2 with the proviso that not more than one c is equal to 0, preferably each c is equal to 1 or one c is equal to 0 and the two other c are equal to 1;
   - each d is independently an integer from 2 to 4, in particular 2;
   - each e is independently an integer from 0 to 10, in particular from 1 to 6;
- a trivalent moiety according to formula (11): 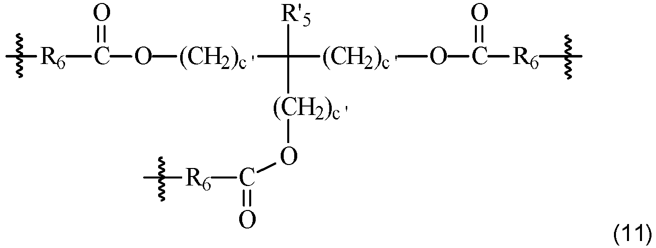 wherein :
   - R'₅ is H, alkyl or alkoxy, preferably R'₅ is alkyl;
   - each R₆ is independently a linear or branched alkylene;
   - each c' is independently an integer from 0 to 2 with the proviso that not more than one c' is equal to 0, preferably each c' is equal to 1 or one c' is equal to 0 and the two other c' are equal to 1;
- a trivalent moiety according to formula (12a), (12b) or (12c): 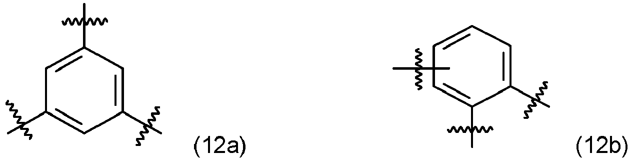 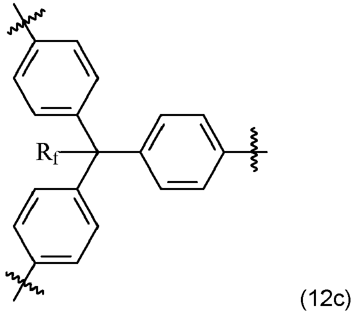 wherein R_{f} is H or methyl;
- a tetravalent moiety according to formula (13a) or (13b): 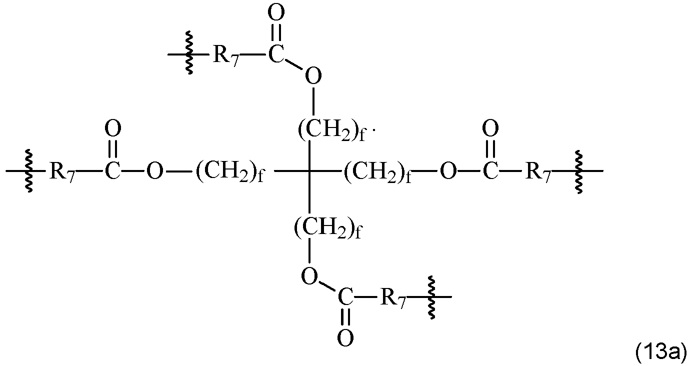 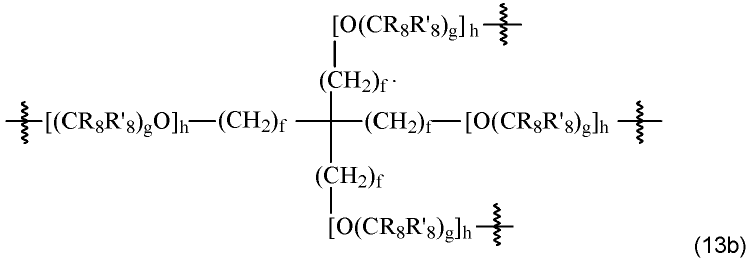 wherein:
   - each R₇ is independently a linear or branched alkylene;
   - R₈ and R'₈ are independently H or methyl;
   - each f is independently an integer from 0 to 2 with the proviso that not more than one f is equal to 0, preferably each f is equal to 1;
   - each g is independently an integer from 2 to 4, in particular 2;
   - each h is independently an integer from 0 to 10, in particular from 1 to 6;
- a tetravalent moiety according to formula (14): 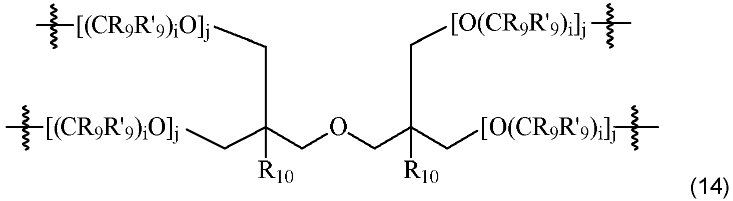 wherein
   - R₉ and R'₈ are independently H or methyl;
   - each R¹⁰ is independently H, alkyl or alkoxy, preferably R¹⁰ is alkyl;
   - each i is independently an integer from 2 to 4, in particular 2;
   - each j is independently an integer from 0 to 10, in particular from 1 to 6;
- a tetra-, penta- or hexavalent moiety according to formula (15): 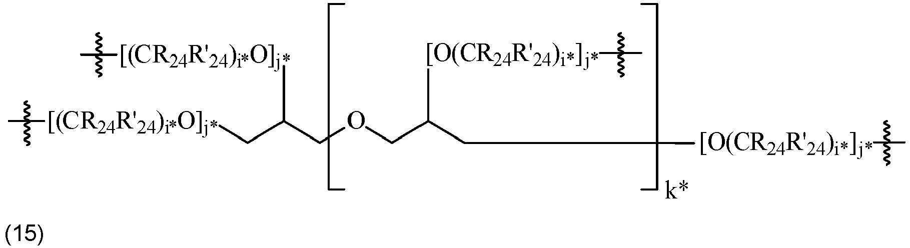 wherein:
   - R₂₄ and R'₂₄ are independently H or methyl;
   - each i* is independently an integer from 2 to 4, in particular 2;
   - each j* is independently an integer from 0 to 10, in particular from 1 to 6;
   - k' is an integer from 1 to 3;
- a hexavalent moiety according to formula (16): 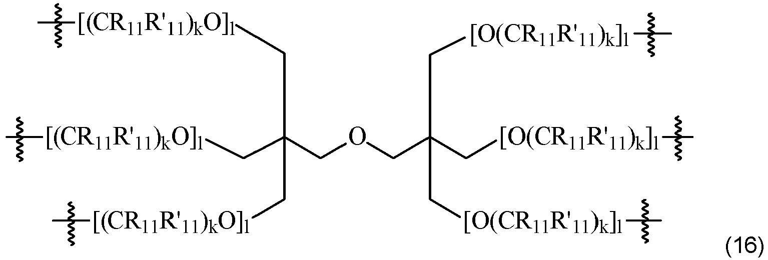 wherein
   - R₁₁ and R'₁₁ are independently H or methyl;;
   - each k is independently an integer from 2 to 4, in particular 2;
   - each I is independently an integer from 0 to 10, in particular from 1 to 6;
- a hexavalent moiety according to formula (17): 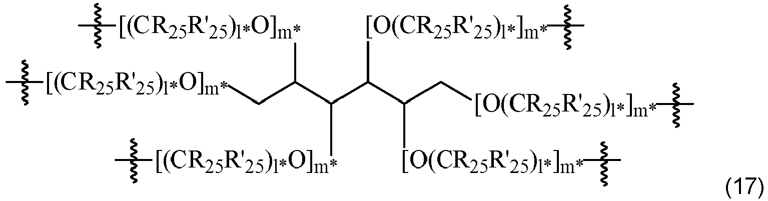 wherein:
   - R₂₅ and R'₂₅ are independently H or methyl;
   - each I* is independently an integer from 2 to 4, in particular 2;
   - each m* is independently an integer from 0 to 10, in particular from 1 to 6;
- a divalent moiety according to one of formulae (20) to (28):

   -(CR₁₂R'₁₂)ₘ- (20)

   -[(CR₁₃R'₁₃)ₙ-O]ₒ-(CR₁₃R'₁₃)ₙ- (21)

   -[(CR₁₄R'₁₄)ₚ-O]_{q}-(CR₁₅R'₁₅),-[O-(CR₁₄R'₁₄)ₚ]_{q}- (22)

   -[(CR₁₆R'₁₆)ₛ-C(=O)O]ₜ-(CR₁₇R'₁₇)ᵤ- (23a)

   -(CR₁₇R' ₁₇)ᵤ-[(CR₁₆R' ₁₆)ₛ₋C(=0)0],- (23b)

   -[(CR₁₈R'₁₈)ᵥ-O-C(=O)-(CR₁₉R'₁₉)_{w}-C(=O)-O]ₓ-(CR₁₈R'₁₈)ᵥ- (24)

   -[(CR₂ₒR'₂ₒ)_{y}-S]_{z}-(CR₂ₒR'₂ₒ)_{y}- (25)

   -(CR₂,R'₂₁)ₘ,-C(=O)-O-(CR₂₂R'₂₂)_{n'}-O-C(=O)-(CR₂₁R'₂₁)_{m'}- (26)

   -(CR₂₃R'₂₃)_{m"}-Cy-[L-C_{Y}]_{n"}-(CR₂₃R'₂₃)_{m"}- (27)

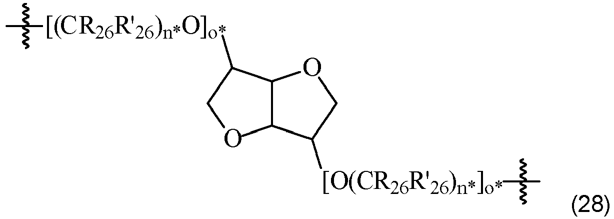

   wherein:
   - R₁₂, R'₁₂, R₁₅, R'₁₅, R₁₇, R'₁₇, R₁₈, R'₁₈, R₁₉, R'₁₉, R₂₁, R'₂₁, R₂₂, R'₂₂, R₂₃ and R'₂₃ are independently H or alkyl;
   - R₁₃, R'₁₃, R₁₄, R'₁₄, R₁₆, R'₁₆, R₂₀, R'₂₀, R₂₆ and R'₂₆ are independently H or methyl;
   - Cy is an optionally substituted ring, in particular an optionally substituted cyclohexylene or phenylene;
   - L is a bond or a linker such as Alk, -C(=O)-, -C(=O)-O-Alk-O-C(=O)-, -SO-, - SO₂-, -C(=CCl₂)- and -Alk-Ph-Alk-;
   - Alk is an optionally substituted alkylene;
   - Ph is an optionally substituted phenylene;
   - m, n', r, v, u and w are independently an integer from 2 to 20;
   - each m" is independently an integer from 0 to 20;
   - n, n*, p and y are independently an integer from 2 to 4;
   - n" is an integer equal to 0 or 1;
   - m', o, t, x and z are independently an integer from 1 to 20;
   - each o* is independently an integer from 0 to 10, in particular from 1 to 6.
   - each q is independently an integer from 0 to 20 with the proviso that at least one q is not 0;
   - s is an integer from 3 to 12.
preferably L₁, L₂ and L₃ are independently a divalent linker selected from an alkylene group such as 1,3-propanediyl, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated derivative of the aforementioned alkylenes, preferably an ethoxylated and/or propoxylated derivative of the aforementioned alkylenes; an esterified, preferably by ring-opening polymerization of a lactone such as ε-caprolactone, derivative of the aforementioned alkylenes; a residue of a di-, tri-, tetra- or polyoxyalkene without the hydroxy groups such as di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol).

According to some embodiments, L₁ and L₄ may independently be the residue of a polyol (i.e the residue that is obtained by removing the OH groups of a polyol). Examples of suitable polyols, referred to herein as P_{OH}, include ethylene glycol, 1,2- or 1,3-propylene glycol, 1,2-, 1,3- or 1,4-butylene glycol, 1,5-pentanediol, 1,6-hexanediol, 1,7-heptanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, 3,3-butylethyl-1,5-pentane diol, cyclohexanediol, cyclohexane-1,4-dimethanol, norbornene dimethanol, norbornane dimethanol, tricyclodecanediol, tricyclodecane dimethanol, dicyclopentadiene diol, hydroquinone bis(2-hydroxyethyl) ether, pyrocatechol, resorcinol, cardol, phloroglucinol, pyrogallol, tris(hydroxyphenyl)methane, tris(hydroxyphenyl)ethane, bisphenol A, B, F or S, hydrogenated bisphenol A, B, F or S, trimethylolmethane, trimethylolethane, trimethylolpropane, di(trimethylolpropane), triethylolpropane, pentaerythritol, di(pentaerythritol), glycerol, di-, tri- or tetraglycerol, a polyglycerol, di-, tri- or tetra(ethylene glycol), di-, tri- or tetra(1,2-propylene glycol), di-, tri- or tetra(1,3-propylene glycol), di-, tri- or tetra(1,4-butylene glycol), a poly(ethylene glycol), a polypropylene glycol), a poly(trimethylene glycol), a poly(tetramethylene glycol), a poly(ethylene glycol-co-propylene glycol), an alditol (i.e. erythritol, threitol, arabitol, xylitol, ribitol, mannitol, sorbitol, galactitol, fucitol or iditol), a dianhydrohexitol (i.e. isosorbide, isomannide, isoidide), tris(2-hydroxyethyl)isocyanurate, a hydroxylated vegetable oil, a C₃₆ dimer diol, a polybutadiene polyol, a polyester polyol, a polyether polyol, a polyorganosiloxane polyol, a polycarbonate polyol, as well as the alkoxylated (e.g., ethoxylated and/or propoxylated) derivatives thereof and the derivatives obtained by ring-opening polymerization of ε-caprolactone initiated with one of the aforementioned polyols, and combinations thereof.

According to some embodiments, L₁ may be the residue of a polyepoxide (i.e the residue that is obtained by removing the epoxy groups of a polyepoxide). Examples of suitable polyepoxides include 1,2,3,4-diepoxybutane, 1,2,4,5-diepoxypentane, 1,2,5,6-diepoxyhexane, 1,2,7,8-diepoxyoctane, 1,2,9,10-diepoxydecane, an epoxidized vegetable oil (such as epoxidized soybean oil and epoxidized linseed oil), epoxidized polybutadiene, triglycidyl isocyanurate, and combinations thereof.

In a preferred embodiment, L₁ and L₄ are independently the residue of a polyol selected from an optionally alkoxylated trimethylolpropane, an optionally alkoxylated di(trimethylolpropane), an optionally alkoxylated pentaerythritol, an optionally alkoxylated di(pentaerythritol), an optionally alkoxylated tri(pentaerythritol), an optionally alkoxylated glycerol, an optionally alkoxylated diglycerol, an optionally alkoxylated sorbitol, a poly(ethylene glycol),a poly(ethylene glycol-co-propylene glycol), a polypropylene glycol), a poly(trimethylene glycol), a poly(tetramethylene glycol).

According to some embodiments, L₂ may be the residue of a polythiol (i.e the residue that is obtained by removing the SH groups of a polythiol). Examples of suitable polythiols, also referred to herein as P_{SH}, include ethane-1,2-dithiol, propane-1,3-dithiol, butane-1,4-dithiol, hexane-1.6-dithiol, octane-1,8-dithiol, decane-1,10-dithiol, 1,8-dimercapto-3,6-dioxaoctane (DMDO), di-, tri- or polyethylene glycol di(ethanethiol), ethylene glycol bis(mercaptoacetate), ethylene glycol bis(3-mercaptopropionate), ethylene glycol bis(3-mercaptobutyrate), 1,2-propylene glycol bis(mercaptoacetate), 1,2-propylene glycol bis(3-mercaptopropionate), 1,2-propylene glycol bis(3-mercaptobutyrate), 1,3-propylene glycol bis(mercaptoacetate), 1,3-propylene glycol bis(3-mercaptopropionate), 1,3-propylene glycol bis(3-mercaptobutyrate), 1,4-butanediol bis(mercaptoacetate), 1,4-butanediol bis(3-mercaptopropionate), 1,4-butanediol bis(3-mercaptobutyrate), 1,6-hexanediol bis(mercaptoacetate), 1,6-hexanediol bis(3-mercaptopropionate), 1,6-hexanediol bis(3-mercaptobutyrate), di-, tri- or polyethylene glycol bis(mercaptoacetate), di-, tri- or polyethylene glycol bis(3-mercaptopropionate), di-, tri- or polyethylene glycol bis(3-mercaptobutyrate), di-, tri- or polypropylene glycol bis(mercaptoacetate), di-, tri- or polypropylene glycol bis(3-mercaptopropionate), di-, tri- or polypropylene glycol bis(3-mercaptobutyrate), trimethylolpropane tris(mercaptoacetate), trimethylolpropane tris(3-mercaptopropionate), trimethylolpropane tris(3-mercaptobutyrate), pentaerythritol tris(mercaptoacetate), pentaerythritol tris(3-mercaptopropionate), pentaerythritol tris(3-mercaptobutyrate), pentaerythritol tetrakis(mercaptoacetate), pentaerythritol tetrakis(3-mercaptopropionate), pentaerythritol tetrakis(3-mercaptobutyrate), tris[2-(3-mercaptopropionyloxy)ethyl] isocyanurate, tris[2-(3-mercaptopropionyloxy)ethyl] isocyanurate, tris[2-(3-mercaptobutyryloxy)ethyl] isocyanurate, mercaptan-terminated polymers (such as such as Capcure^{®} 3-800 (BASF), GPM-800 (Gabriel Performance Products), Capcure^{®} LOF (BASF), GPM-800LO (Gabriel Performance Products), KarenzMT PE-1 (Showa Denko)), as well as the alkoxylated (e.g., ethoxylated and/or propoxylated) derivatives thereof, and combinations thereof.

According to some embodiments, L₃ may be the residue of a polyamine (i.e the residue that is obtained by removing the primary and secondary amine groups of a polyamine). Examples of suitable polyamines, also referred to herein as P_{NH}, include 1-amino-3-aminomethyl-3,5,5-trimethyl cyclohexane (IPDA), bis(4-aminocyclohexyl)methane, bis(4-amino-3-methylcyclohexyl)methane, 2-methyl pentamethylene diamine, ethylene diamine, 1,2- or 1,3-propanediamine, 2-methyl-1,2-propanediamine, 2,2-dimethyl-1,3-propanediamine, 1,3- or 1,4-butane diamine, 1,3- or 1,5-pentane diamine, 2-methyl-1,5-pentane diamine, 1,6-hexane diamine, 2,5-dimethyl-2,5-hexane diamine, 2,2,4- or 2,4,4-trimethyl-1,6-hexane diamine, 1,7-heptane diamine, 1,8-octane diamine, 1,9-nonane diamine, 1,10-decane diamine, 1,11-undecane diamine, 1,12-dodecane diamine, 2,4- or 2,6-hexahydrotoluylene diamine, 2,4'- or 4,4'-diamino-dicyclohexylmethane, 1,3- or 1,4-cyclohexane diamine, 1,3- or 1,4-bis(methylamino)cyclohexane, 1,8-p-menthane diamine, hydrazine, phenylene diamine, 2,3-2,4- 3,4- or 2,6-toluylene diamine, o-, m- or p-xylylene diamine, 2,4'- or 4,4'-diaminodiphenyl methane, benzidine, N-(2-aminoethyl)-1,3-propane diamine, N,N'-di-(2-aminoethyl)piperazine, a polyetheramine (in particular a Jeffamine^{®} such as Jeffamine^{®} D-230, Jeffamine^{®} D-400, Jeffamine^{®} D-2000, Jeffamine^{®} D-2010, Jeffamine^{®} D-4000, Jeffamine^{®} ED-600, Jeffamine^{®} ED-900, Jeffamine^{®} ED-2003, Jeffamine^{®} EDR-148, Jeffamine^{®} EDR-176, Jeffamine^{®} THF-100, Jeffamine^{®} THF-170, Jeffamine^{®} T403, Jeffamine^{®} T3000, Jeffamine^{®} T5000, Jeffamine^{®} RFD-270) and combinations thereof.

In a preferred embodiment, the photoinitiator P has formula (1) wherein:
- Ar is a group of formula (2);
- R₁ and R₂ are H;
- one of R'₁ and R'₂ is H, and the other of R'₁ and R'₂ is -C(R⁸)(CO-W¹-R⁹)(CO-W²-R¹⁰) wherein R⁸ is H, W¹ and W² are oxygen atoms, R⁹ and R¹⁰ are independently an optionally substituted alkyl;
- R₃ is phenyl;
- Q₁ is optionally substituted aryl;
- Q₂ is -[CH₂-CH(OH)-Y₁]ₐ-Z¹ wherein a egal 0 and Z¹ is a group of formula (5) : 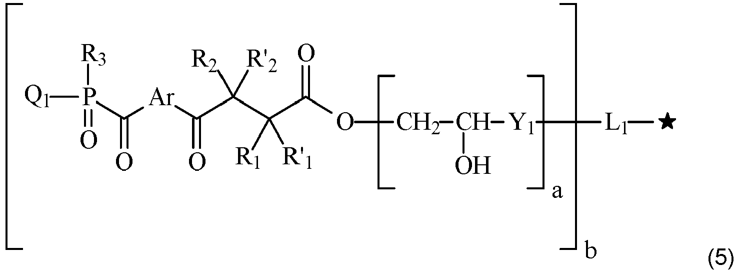 wherein:
   - Ar, Y₁, R₁, R₂, R'₁, R'₂, R₃, Q₁ and a are as defined in this preferred embodiment;
   - a is 0;
   - b is a number chosen from 1 to 3;
   - L₁ is a linker having formula (21):

      -[(CR₁₃R'₁₃)ₙ-O]ₒ-(CR₁₃R'₁₃)ₙ₋ (21)
wherein R₁₃, R'₁₃, n and o are as defined above.

Non-limiting examples of photoinitiators P of formula (1) are detailed below: 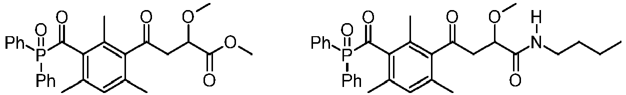 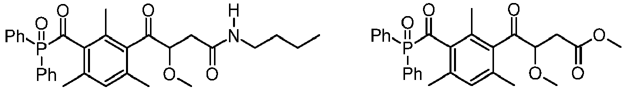 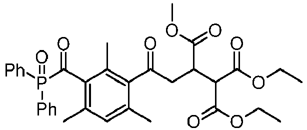 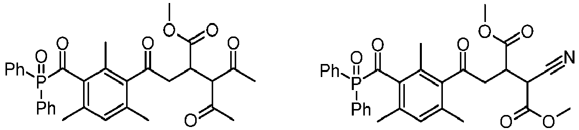 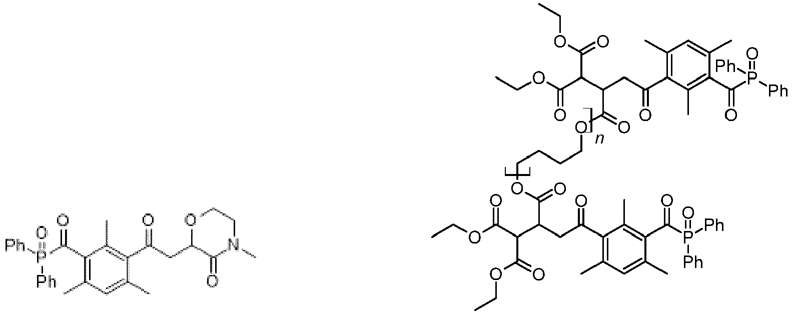 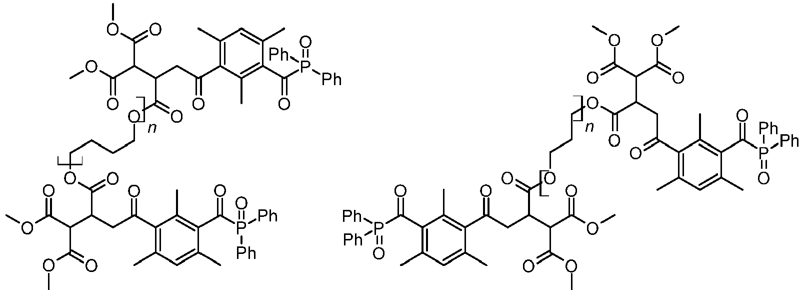 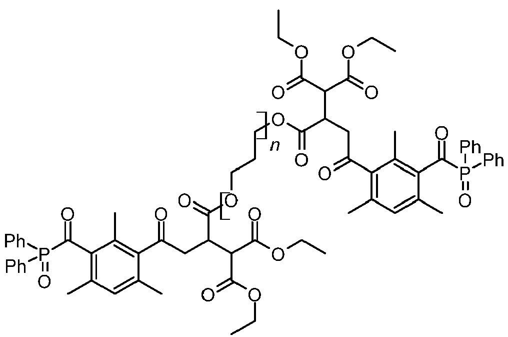 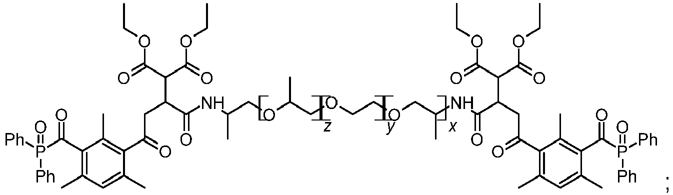 and isomers thereof;
wherein each a, b, c, n, x, y and z independently represents an integer from 1 to 50, preferably from 1 to 20. In the formulas above, one or more of the oxyethylene units may indifferently be replaced by an oxypropylene unit and/or one or more of the oxypropylene units may indifferently be replaced by an oxyethylene unit.

More preferably, the photoinitiator P is the following one: 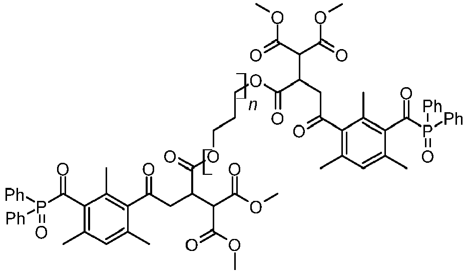 wherein n represents an integer from 1 to 50, preferably from 1 to 20, more preferably from 1 to 10.

The photoinitiator of formula (1) may be prepared by a process comprising reacting at least one precursor of formula (29) with at least one product of formula (30):

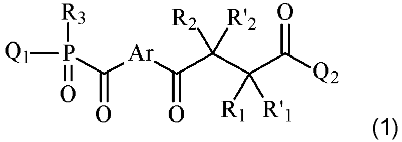

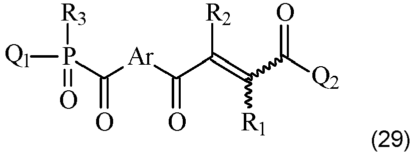

R'₁-R'₂ (30)

wherein Ar, R₁, R₂, R₃, R'₁, R'₂, Q₁, and Q₂ are as defined above.

The wavy bonds illustrated in the formula (29) represent either the cis or trans isomer.

Preferably, the product of formula (30) may be selected from:
- an alcohol, in particular a primary alcohol (for example methanol, ethanol, propan-1-ol, butan-1-ol, pentan-1-ol, 3-methylbutan-1-ol, 2,2-dimethylpropan-1-ol, hexan-1-ol, methylpentanol, 3-ethylbutan-1-ol, heptan-1-ol, octan-1-ol, 6-ethylhexa-1-nol, nonan-1-ol, decan-1-ol, dodecan-1-ol, tridecan-1-ol, isotridecan-1-ol, butoxyethanol, benzyl alcohol, methoxy polyethylene glycol);
- a thiol, in particular a primary thiol (for example 1-hexanethiol, 1-octanethiol, 1-decanethiol, 1-dodecanethiol, methyl thioglycolate, ethyl thioglycolate, methyl 3-mercaptopropionate, ethyl 3-mercaptopropionate);
- an active methylene compound, in particular a β-diester (for example dimethylmalonate, diethylmalonate, dipropylmalonate), a β-ketoester (for example ethylacetoacetate), a β-diketone (for example pentane-2,4-dione, cyclohexane-1,3-dione, 5,5-dimethylcyclohexane-1,3-dione), a β-ketonitrile (for example 3-oxobutanenitrile), a β-cyanoester (for example methyl cyanoacetate, ethyl cyanoacetate), a β-dinitrile (for example malononitrile).

The above reaction may be carried out in the presence of one or more compounds selected from:
- a base, in particular a base chosen from sodium or potassium hydroxide, sodium or potassium carbonate or an amine base, such as a tertiary amine base, for example triethylamine, *N,N*-diisopropylethylamine, picoline, pyridine, 1,4-diazabicyclo[2.2.2]octane (DABCO), 1,5-diazabicyclo[4.3.0]non-5-ene (DBN), 1,8-diazabicyclo[5.4.0]undec-7-ene (DBU) or 4-dimethylaminopyridine (DMAP);
- a solvent, such as toluene, xylene, 2-butanone, methanol, *N*-methylpyrrolidinone, *N*,*N-*dimethylformamide, *N*,*N*-dimethylacetamide, dimethyl sulfoxide, sulfolane and mixtures thereof.

Said reaction may be carried out at a temperature from 10 to 120°C and preferably from 50 to 100°C. Said reaction may be carried out for a duration from 30 min to 24 hours and preferably from 1 to 10 hours. Once the reaction is finished, the reaction medium may be washed one or more times with an aqueous solution, for example an aqueous solution of hydrochloric acid, an aqueous solution of sodium bicarbonate and/or an aqueous solution of sodium chloride. The solvent(s) may be evaporated from the resulting organic phase.

The precursor of formula (29) may be prepared by a process comprising reacting at least one precursor of formula (31) with at least one compound of formula (32) to (42):

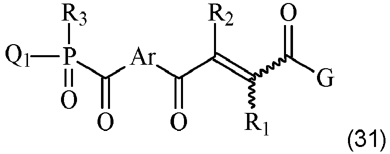

R¹⁴-OH (32)

R¹⁵-SH (33)

NHR¹⁶R¹⁷ (34)

Z^{1a}-OH (35)

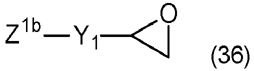

Z²-SH (37)

Z³-NH(R¹⁸) (38)

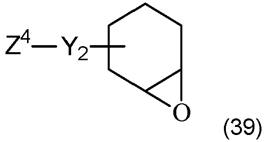

wherein:
- Ar, R₁, R₂, R₃, Q₁, Y₁ and Y₂ are as defined above;
- G is OH, a halogen atom or -O-C(=O)-J;
- J is alkyl or aryl, in particular tert-butyl;
- R¹⁴ is as defined above;
- R¹⁵ is as defined above;
- R¹⁶ and R¹⁷ are as defined above;
- Z^{1a} is a hydroxyl-containing moiety;
- Z^{1b} is an epoxide-containing moiety;
- Z² is a thiol-containing moiety;
- Z³ is an amine-containing moiety;
- Z⁴ is an epoxide-containing moiety.

The wavy bonds illustrated in the formula (31) represent either the cis or trans isomer.

The above reaction may be carried out in the presence of one or more compounds selected from:
- a catalyst, in particular a catalyst chosen from a zirconium catalyst, a titanium catalyst and a quaternary ammonium salt, preferably chosen from a zirconium (IV) catalyst, a titanium (IV) catalyst and a tetraalkylammonium salt, more preferably chosen from zirconium(IV) acetylacetonate, titanium(IV) isopropoxide, titanium (IV) oxyacetylacetonate, tetrabutylammonium bromide and tetrabutylammonium chloride;
- a solvent, in particular a solvent selected from toluene, xylene, acetonitrile, acetone, tetrahydrofuran and mixtures thereof;
- a co-solvent such as *N*-methylpyrrolidinone, *N*,*N*-dimethylformamide, *N*,*N-*dimethylacetamide, dimethyl sulfoxide, sulfolane and mixtures thereof.
- a stabilizer/polymerization inhibitor, in particular a polymerization inhibitor selected from hydroquinone (HQ), hydro-quinone monomethyl ether (MEHQ, 4-methoxyphenol), 4-tert-butylcatechol (TBC), and 3,5-di-tertiobutyl-4-hydroxytoluene (BHT), phenothiazine (PTZ) and mixtures thereof.

Said reaction may be carried out in the presence of a zirconium catalyst or a titanium catalyst when the reaction corresponds to an esterification, amidification or thioesterification reaction. Said reaction may be carried out in the presence of a quaternary ammonium salt as the catalyst when the reaction corresponds to the opening of an epoxy ring. Said reaction may be carried out at a temperature from 70 to 140°C and preferably from 90 to 130°C. Said reaction may be carried out for a duration from 1 to 72 hours and preferably from 4 to 24 hours. Said reaction may be carried out so as to eliminate the water that is formed during the reaction. For example, the reaction may be carried out in a reactor equipped with a condenser (i.e. Dean-Stark) and the reaction medium may be heated at a temperature sufficient to evaporate the water (optionally as an azeotropic mixture with a solvent). Once the reaction is finished, the reaction medium may be washed one or more times with an aqueous solution, for example an aqueous solution of sodium chloride. The solvent(s) may be evaporated from the resulting organic phase.

In one embodiment, the precursor of formula (30) may be prepared by a process comprising reacting at least one precursor of formula (33) with at least one compound of formula (35) and Z^{1a} corresponds to formula (40): 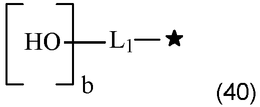 wherein L₁ and b are as defined above.

Preferably, the compound of formula (35) is a polyol as listed above for P_{OH}.

Alternatively, the precursor of formula (29) may be prepared by a process comprising reacting at least one precursor of formula (31) with at least one compound of formula (36) and Z^{1b} corresponds to formula (41): 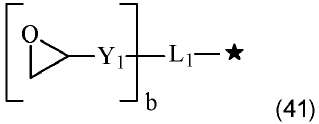 wherein:
- Y₁ is as defined above;
- L₁ and b are as defined above.

Preferably, the compound of formula (36) is a polyepoxide, also referred to herein as P_{EPOX}, selected from 1,2,3,4-diepoxybutane; 1,2,4,5-diepoxypentane; 1,2,5,6-diepoxyhexane; 1,2,7,8-diepoxyoctane; 1,2,9,10-diepoxydecane; a glycidyl ether or ester of a polyol (such as the polyols listed above for P_{OH}) including ethylene glycol diglycidyl ether, 1,2- or 1,3-propylene glycol diglycidyl ether, 1,2-, 1,3- or 1,4-butanediol diglycidyl ether, 1,5-pentanediol diglycidyl ether, 1,6-hexanediol diglycidyl ether, 1,7-hexanediol diglycidyl ether, 1,8-octanediol diglycidyl ether, 1,9-nonanediol diglycidyl ether, 1,10-decanediol diglycidyl ether, 1,12-dodecanediol diglycidyl ether, 2-methyl-1,3-propanediol diglycidyl ether, neopentyl glycol diglycidyl ether, 2,2-diethyl-1,3-propane diol diglycidyl ether, 3-methyl-1,5-pentanediol diglycidyl ether, 3,3-dimethyl-1,5-pentanediol diglycidyl ether, 2,4-diethyl-1,5-pentanediol diglycidyl ether, 3,3-butylethyl-1,5-pentane diol diglycidyl ether, di-, tri- or tetra(ethylene glycol) diglycidyl ether, di-, tri- or tetra(1,2-propylene glycol) diglycidyl ether, di-, tri- or tetra(1,3-propylene glycol) diglycidyl ether, di-, tri- or tetra(1,4-butylene glycol) diglycidyl ether, a poly(ethylene glycol) diglycidyl ether, a polypropylene glycol) diglycidyl ether, a poly(trimethylene glycol) diglycidyl ether, a poly(tetramethylene glycol) diglycidyl ether, a poly(ethylene glycol-co-propylene glycol) diglycidyl ether, glycerol triglycidyl ether, a polyglycerol polyglycidyl ether, trimethylolmethane triglycidyl ether, trimethylolethane triglycidyl ether, trimethylolpropane triglycidyl ether, di(trimethylolpropane) tetraglycidyl ether, pentaerythritol tetraglycidyl ether, diglycidyl cyclohexanedicarboxylate, cyclohexane diglycidyl ether, cyclohexane-1,4-dimethanol diglycidyl ether, tricyclodecane dimethanol diglycidyl ether, isosorbide diglycidyl ether, pyrocatechol diglycidyl ether, resorcinol diglycidyl ether, cardol diglycidyl ether, phloroglucinol triglycidyl ether, pyrogallol triglycidyl ether, tris(hydroxyphenyl)methane triglycidyl ether, tris(hydroxyphenyl)ethane triglycidyl ether, bisphenol A, B, F or S diglycidyl ether, hydrogenated bisphenol A, B, F or S diglycidyl ether, diglycidyl phthalate, diglycidyl terephthalate, diglycidyl isophthalate; an epoxidized vegetable oil (such as epoxidized soybean oil and epoxidized linseed oil); epoxidized polybutadiene; triglycidyl isocyanurate, and combinations thereof.

Alternatively, the precursor of formula (29) may be prepared by a process comprising reacting at least one precursor of formula (31) with at least one compound of formula (37) and Z² corresponds to formula (42): 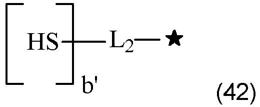 wherein L₂ and b' are as defined above.

Preferably, the compound of formula (37) is a polythiol as listed above for P_{SH}.

Alternatively, the precursor of formula (29) may be prepared by a process comprising reacting at least one precursor of formula (31) with at least one compound of formula (38) and Z³ corresponds to formula (43): 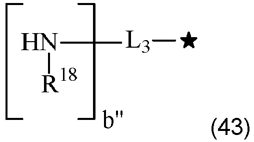 wherein:
- R¹⁸ is as defined above;
- L₃ and b" are as defined above.

Preferably, the compound of formula (38) is a polyamine as listed above for P_{NH}.

Alternatively, the precursor of formula (29) may be prepared by a process comprising reacting at least one precursor of formula (31) with at least one compound of formula (39) and Z^{1b} corresponds to formula (44): 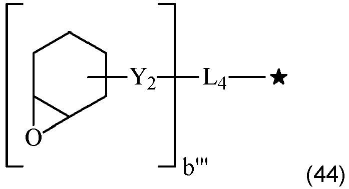 wherein:
- Y₂ is as defined above;
- L₄ and b‴ are as defined above.

Preferably, the compound of formula (39) is a cycloaliphatic polyepoxide, also referred to as P_{CYCLO. EPOX}, selected from 7-oxabicyclo[4.1.0]hept-3-ylmethyl 7-oxabicyclo[4.1.0]heptane-3-carboxylate (UviCure S105), bis((3,4-epoxycyclohexyl)methyl) adipate (UviCure S128), 2-(3,4-epoxycyclohexyl-5,5-spiro-3,4-epoxy)cyclohexane-1,4-dioxane, bis(3,4-epoxy-6-methylcyclohexylmethyl)adipate, 3,4-epoxy-6-methylcyclohexyl-3',4'-epoxy-6'-methylcyclohexanecarboxylate, a compound of formula (44a), (44b) or (44c) and combinations thereof:

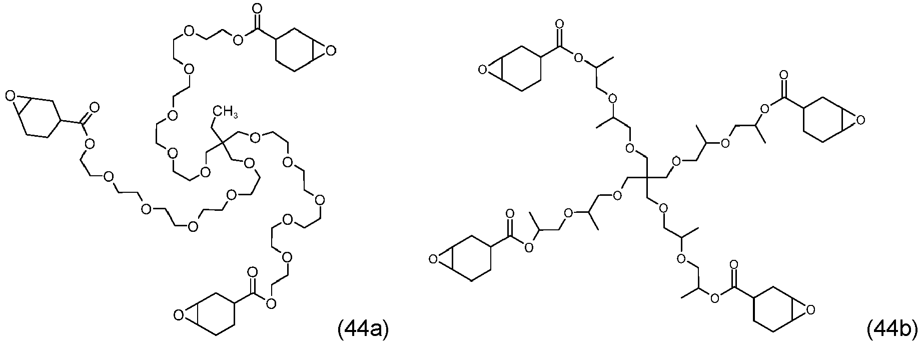

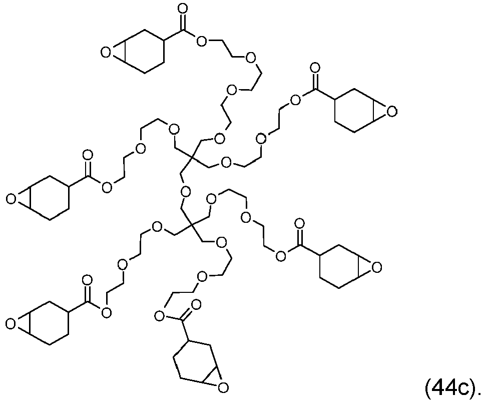

The precursor of formula (31) may be prepared by a process comprising reacting at least one phosphine oxide of formula (45) with at least one cyclic anhydride of formula (46) to provide a precursor according to formula (31) wherein G is OH: 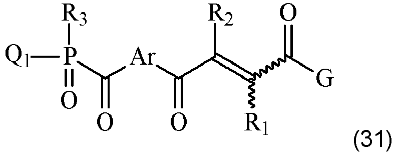 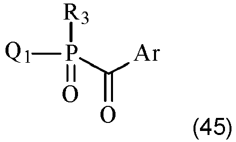 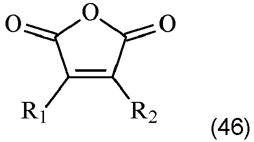 wherein Ar R_{1,} R₂ R₃. Q₁ are as defined above
the process optionally comprising an additional step of:
- reacting the precursor according to formula (31) wherein G is OH with an acyl halide of formula (47) to provide a precursor according to formula (31) wherein G is -O-C(=O)-J

   Hal-C(=O)-J (47)

   wherein Hal is a halogen atom and J is alkyl or aryl, in particular tert-butyl; or
- reacting the precursor according to formula (31) wherein G is OH with a halogenating agent, in particular thionyl chloride, to provide a precursor according to formula (31) wherein G is a halogen atom.

The reaction of the at least one phosphine oxide of formula (45) with the at least one cyclic anhydride of formula (46) may be carried out using maleic anhydride as the cyclic anhydride of formula (46). Said reaction may be carried out in the presence of one or more compounds selected from:
- a Lewis acid, in particular a metal halide such as iron chloride, aluminum chloride or aluminum bromide;
- a solvent, in particular a solvent selected from toluene, xylene, dichloromethane, chloroform, 1,2-dichloroethane and mixtures thereof and mixtures thereof.

Said reaction may be carried out at a temperature from 15 to 50°C, in particular 20 to 40°C. Said reaction may be carried out for a duration from 1 to 72 hours, preferably 8 to 36 hours. Once the reaction is finished, the reaction medium may be washed one or more times with an aqueous solution, for example an aqueous solution of sodium chloride. The solvent(s) may be evaporated from the resulting organic phase.

The reaction of the precursor according to formula (31) wherein G is H with an acyl halide of formula (47) may be carried out with trimethylacetyl chloride as the acyl chloride of formula (47). Said reaction may be carried out in the presence of one or more compounds selected from:
- a base, in particular a base chosen from sodium or potassium hydroxide, sodium or potassium carbonate or an amine base, such as a tertiary amine base, for example triethylamine, *N*,*N*-diisopropylethylamine, picoline, pyridine, 1,4-diazabicyclo[2.2.2]octane (DABCO), 1,5-diazabicyclo[4.3.0]non-5-ene (DBN), 1,8-diazabicyclo[5.4.0]undec-7-ene (DBU) or 4-dimethylaminopyridine (DMAP);
- a solvent, such as xylene, toluene, tetrahydrofuran, dichloromethane and mixtures thereof. Said reaction may be carried out a temperature of -10 to 10°C, preferably from 0 to 5°C. Said reaction may be carried out for a duration from 1 to 120 minutes and preferably from 15 to 45 minutes. The resulting anhydride may be used neat in the next step of the process (i.e. reaction with at least one compound of formula (32) to (39) to provide a precursor of formula (29) ).

The photocurable composition may comprise from 0.05 to 5% by weight of photoinitiator P, preferably from 0.1 to 1% by weight based on the total weight of the photocurable composition.

### Optional radical polymerization inhibitor

The photocurable composition may comprise a radical polymerization inhibitor.

Radical polymerization inhibitors typically help preventing premature polymerization due to any radical mechanism such as auto-oxidation or thermal oxidation.

Radical polymerization inhibitors are preferably selected from the group consisting of hindered phenolic or polyphenolic compounds, and mixtures thereof.

Radical polymerization inhibitors are preferably selected from the group consisting of: hydroquinone, hydroquinone monomethyl ether, mono-tertiary-butyl hydroquinone, 2,5-ditertiary-butyl-hydroquinone, p-methoxyphenol, hydroxyanisole, butylated hydroxyanisole, hydroxyanisol butyl ether, 2,6-di-tert-butyl-p-cresol, 2,2'-methylene-bis-(6-tert-butyl-4-methylphenol), p-tert-butyl catechol, 1,3,5-trimethyl-2,4,6-tris(3,5-di-tert-butyl-4-hydroxybenzyl) benzene, hydroxytoluene butyl ether, and mixtures thereof; more preferably from hydroquinone monomethyl ether, 2,2'-methylene-bis-(6-tert-butyl-4-methylphenol), and mixtures thereof.

Preferably, the photocurable composition comprises a radical polymerization inhibitor.

Preferably, the photocurable composition comprises from 0.005% to 0.09% by weight of radical polymerization inhibitor(s) based on the total weight of the composition.

### Optional photoinitiator

The photocurable composition may comprise a photoinitiator other than the photoinitiator P as defined herein.

The photoinitiator other than a photoinitiator P may be a photoinitiator having Norrish type I activity and/or Norrish type II activity, more particularly a radical photoinitiator having Norrish type I activity.

Non-limiting types of other photoinitiators suitable for use in the photocurable composition of the invention include, for example, benzoins, benzoin ethers, acetophenones, a-hydroxy acetophenones, benzil, benzil ketals, anthraquinones, phosphine oxides, acylphosphine oxides, α-hydroxyketones, phenylglyoxylates, α-aminoketones, benzophenones, thioxanthones, xanthones, acridine derivatives, phenazine derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable other photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, , 2-isopropylthioxanthone, thioxanthone, diethyl thioxanthone, 1,5-acenaphthylene, benzil, α-hydroxyketone, 2,4,6-trimethylbenzoyldiphenyl phosphine oxide, , 2,2-dimethoxy-1,2-diphenylethanone, 1-hydroxycyclohexyl phenyl ketone, 2-methyl-1-[4-(methylthio) phenyl]-2-morpholinopropanone, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid sodium salt monohydrate, (benzene) tricarbonylchromium, , benzoin isobutyl ether, benzophenone/1-hydroxycyclohexyl phenyl ketone 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, , 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone 50/50 blend, 4'-ethoxyacetophenone, 2,4,6-trimethylbenzoyldiphenylphosphine oxide, , 3'-hydroxyacetophenone, 4'-hydroxyacetophenone, 3-hydroxybenzophenone, 4-hydroxybenzophenone, 2-methylbenzophenone, 3-methylbenzophenone, methybenzoylformate, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, and combinations thereof.

Suitable other photoinitiators are commercially available under the denominations lrgacure^{®} 819 (BASF) or Darocur^{®} TPO (BASF) for phenyl-substituted acyl phosphines; Irgacure^{®} 184/500/2959 (BASF) or Darocur^{®} 1173 (BASF) for alpha-hydroxy ketones; lrgacure^{®} 651 (BASF) for benzyldimethylketals, Irgacure^{®} 754 (BASF) or Darocur^{®} MBF (BASF) for phenylglyoxylates; from Sigma-Aldrich Merck for camphorquinone; under the denomination Ivocerin^{™} from Ivoclar KGaA& AC Co. for acyl germane compounds; and from Sigma-Aldrich Merck for dialkylsilylglyoxylates.

Preferably, the photocurable composition does not comprise acyl germane compounds.

More preferably, the photocurable composition does not comprise germanium or any compound based on germanium. This is advantageous because less toxic that with germanium, and will not lead to migration.

Preferably, the photocurable composition does not comprise other photoinitiator than the photoinitiator P as defined herein.

### Optional thickener

The photocurable composition may comprise at least one thickener.

A suitable thickener or thickening agent may be selected from those which are compatible with the cyanoacrylate.

Preferably, the thickener is selected from the group consisting of poly(meth)acrylates, polyvinylpyrrolidones, polyvinyl acetates, partially hydrolysed polyvinyl acetates, vinyl acetate copolymers, acylated cellulose polymers, polyoxylates, polycaprolactones, ethylene-acrylic copolymers, copolymers of lactic acid and caprolactone, and mixtures thereof.

The vinyl acetate copolymers may be copolymers of polyvinyl chloride and polyvinyl acetate, copolymers of polyethylene and polyvinyl acetate.

The copolymers typically include terpolymers. For example, copolymers ethylene-acrylic comprises terpolymers of ethylene-methylacrylate-carboxylic acid-based monomers.

Copolymers of polyethylene and polyvinyl acetate are typically commercially available under the tradename LEVAMELT by Lanxess. Examples are LEVAMELT^{®}400, LEVAMELT^{®} 600 and LEVAMELT^{®} 900. The LEVAMELT products typically differs in the amount of vinyl acetate present. For example, LEVAMELT^{®} 400 comprises an ethylene-vinyl acetate copolymer comprising 40 wt% vinyl acetate.

Examples of copolymers of polyvinyl chloride and polyvinyl acetate are VINNOL products commercialized by Wacker, such as for example Vinnol^{®} H40-60. It covers both copolymers and terpolymers.

Examples of copolymers of ethylene, acrylate (butyl or methyl) and carboxylic acid-based monomers are Vamac^{®} G or Vamac^{®} Ultra LT from DuPont.

The total content of thickener (including mixtures of thickener) in the composition may range from 2 wt.% to 18 wt.%, preferably from 3 wt.% to 12 wt.%, and more preferably from 4 wt.% to 10 wt.% based on the total weight of the composition.

Preferably, the thickener is selected from the group consisting of vinyl acetate copolymers, poly(meth)acrylates, ethylene-acrylic copolymers, and mixtures thereof.

More preferably, the thickener is selected from the group consisting of poly(meth)acrylates, copolymer of polyethylene and polyvinyl acetate, copolymers of polyvinyl chloride and polyvinyl acetate, copolymers of ethylene, methylacrylate and carboxylic acid-based monomers, and mixtures thereof.

### Optional additional photopolymerizable monomers

The photocurable composition may comprise additional photopolymerizable monomers (different from cyanoacrylate), preferably selected from (meth)acrylate, methylene malonate, and mixtures thereof.

US2018/215973 describes suitable (meth)acrylate monomers.

The (meth)acrylate monomers may be selected from the group consisting of monofunctional (meth)acrylate monomers, polyfunctional acrylate monomers, and mixtures thereof. The monofunctional (meth)acrylate monomers may be selected from linear or branched alkyl, alkoxylakyl, furfuryl, isobornyl, glycidyl, or phenoxyethyl, esters and the cyclic and heterocyclic esters.

Suitable monofunctional acrylate monomers are commercially available under the denominations SR-531, SR-789 from Sartomer.

The polyfunctional (meth)acrylate monomers may be selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPTA), ethoxylatedtrimethylolpropane tri(meth)acrylate, neopentylglycoldiacrylate, pentaerythritoltetraacrylate (PETA), pentaerythritoltetramethacrylate (PETMA), dipentaerythritolpenta(meth)acrylate, dipentaerythritolhexa(meth)acrylate, bisphenol-A-diacrylate, bisphenol-A-dimethacrylate, ethoxylatedbisphenol-A-diacrylate, tricyclodecane dimethanol diacrylate (commercially available as Sartomer SR833S), propoxylatedbisphenol-A-diacrylate, and mixtures thereof. Polyfunctional (meth)acrylic esters may be of relatively low molecular weight such as the commercially available, triethylene oxide dimethacrylate, or butanedioldimethacrylate, or may be of higher molecular weight: (meth)acrylic functionalized oligomers and (meth)acrylic functionalized resins, for example (meth)acrylic ester terminated polymers, such as (meth)acrylic terminated polyesters or urethane polymers or copolymers or so-called (meth)acrylic ester functionalised telechelic, dendrimeric or hyperbranched materials. Suitable (meth)acrylic monomers are commercially available from Sartomer, Arkema and BASF, such as for example SR-341, SR349, SR-833S, SR-508 and SR-834 from Sartomer.

The photocurable composition may comprise from 0% to 30% by weight of additional photopolymerizable monomers, by total weight of the mixtures of photopolymerizable monomers.

Preferably, the photocurable composition is substantially free of photopolymerizable monomers other than cyanoacrylate. By "substantially free of" is meant that the photocurable composition comprises 1 % by weight or less, preferably 0.1 % by weight or less, more preferably 0.01 % by weight or less, most preferably 0 % by weight (free), of additional photopolymerizable monomers by total weight of the photocurable composition.

### Optional additive

The composition may comprise at least one additive preferably selected from the group consisting of: an acid stabilizing agent, a radical stabilizing agent, an adhesion promoter for metal, an adhesion promoter for glass/tile, a pigment, a dye, a fluorophore, a thixotropic agent, a toughener, an accelerating agent, a filler, a plasticizer, and mixtures thereof.

Radical stabilizing agents are typically radical polymerization inhibitors, and are preferably selected from the group consisting of 4-methoxyphenol, hydroquinone, hydroquinone monomethyl ether, hydroxytoluene butyl ether, hydroxyanisole butyl ether, 4,4'-methylenebis (2,6-di-*tert*-butylphenol), and mixtures thereof.

The total content of radical stabilizing agent(s) in the photocurable composition, may range from 0% to 0.2% by weight, preferably from 0.001% to 0.1% by weight based on the total weight of said photocurable composition.

The acid stabilizing agents are typically inhibitors of the anionic polymerization. The acid stabilizing agent may be selected from the group consisting of Bronsted acids, Lewis acids, and mixtures thereof. The acid stabilizing agent is preferably selected from the group consisting of methanesulfonic acid, boron trifluoride etherate, *p*-toluenesulfonic acid, hydrofluoric acid, sulphur dioxide, and mixtures thereof.

A suitable accelerating agent (or accelerator) may be selected from calixarenes, crown ethers (for example, 15 Crown 5, 18 Crown 6, Dibenzo 18 Crown 6, commercialized by Alfa Aesar), cyclodextrins, and mixtures thereof.

The content of accelerating agent in the photocurable composition may range from 0% to 1%, preferably from 0.1% to 1% by weight based on the total weight of the photocurable composition.

Typically, an adhesion promoter may be chosen from the group consisting of aromatic carboxylic acid or anhydride, and preferably from the group consisting of trimellitic acid, trimellitic anhydride, cis-1,2,3,6-tetrahydrophthalic anhydride, pyromellitic acid, pyromellitic anhydride, dianhydride of 3,3',4,4'-benzophenonetetracarboxylic acid, itaconic acid, itaconic anhydride, 3-buten-1,2,3-tricarboxylic acid, and mixtures thereof.

The total content of adhesion promoter(s) in the photocurable composition may range from 0 wt.% to 0.1 wt.%, preferably from 0.01 wt.% to 0.05 wt.% based on the total weight of the composition.

A suitable thixotropic agent may be selected from the group consisting of hydrogenated castor oil optionally modified by reaction with an amine, polyamides, silica, and mixtures thereof.

Preferably, the thixotropic agent is silica, more preferably fumed silica, even more preferably hydrophobic fumed silica. Hydrophobic fumed silica may also acts as a filler. A hydrophobic fumed silica is commercially available under the commercial denomination Aerosil^{®} R202 from Evonik.

If present, the photocurable composition may comprise from 2% to 10% by weight, preferably from 3% to 9% by weight, more preferably from 7% to 9% by weight, of thixotropic agents by total weight of the photocurable composition.

Suitable tougheners or toughening agents may be block copolymers such as, for example, polymethylmethacrylate-co-polybutylacrylate-co-polymethylmethacrylate, for example commercially available as Kurarity LA2140; elastomeric rubbers; elastomeric polymers; liquid elastomers; polyesters; acrylic rubbers; butadiene/acrylonitrile rubber; Buna rubber; liquid rubbers (such as for example the ones marketed by Kuraray, LIR-50, LIR-403;LIR410); polyisobutylene; polyisoprene; natural rubber; synthetic rubber such as for example styrene/butadiene rubber (SBR); polyurethane polymers; fluorinated rubbers; isoprene-acrylonitrile polymers; chlorosulfonated polyethylenes; block copolymers; core-shell rubber particles (such as clearstrength^{®} XT150), and mixtures thereof.

Typically, the content of toughening agent in the photocurable composition ranges from 0 wt.% to 15 wt.%, preferably from 3 wt.% to 8 wt.%, and more preferably from 4 wt.% to 7 wt.% based on the total weight of the photocurable composition.

The plasticizer may be any plasticizer comprising at least one ester group. The plasticizer may be selected from the group consisting of: phthalates, azelates, adipates, alkyl sebacates, and mixtures thereof.

The plasticizer may be selected from trimethyl trimellitate, diethylene glycol dibenzoate, diethyl malonate, triethyl-O-acetyl citrate, benzylbutylphtalate, dipropylene glycol dibenzoate, diethyl adipate, tributyl-O-acetyl citrate, dimethyl sebacate, and mixtures thereof.

Preferably, the total content of additive(s) in the photocurable composition is lower than 10 % by weight, more preferably lower than 5 % by weight, even more preferably lower than 2 wt% based on the total weight of the photocurable composition.

### Photocurable composition

Preferably, the photocurable composition has a viscosity ranging from 2 to 500 000 mPa.s at 25°C.

More preferably, the photocurable composition has a viscosity ranging from 3 to 150 000mPa.s at 25°C.

The viscosity may be measured according to the ASTM D3236 standard and in a Brookfield viscometer.

The photocurable composition of the invention may be an ink composition, a coating composition, an adhesive composition, a sealant composition, a molding composition, a dental composition, a nail polish composition or a 3D-printing composition.

The photocurable composition is preferably an adhesive composition.

In a preferred embodiment, the photocurable composition comprises:
- from 0.05 to 5% of at phosphine oxide-based photoinitiator P having a molecular weight higher than or equal to 1 000 g/mol;
- from 60 to 99.5% by weight of a cyanoacrylate ;
- from 50 to 500 ppm of a ferrocene compound;
- from 2 to 18 % by weight of a thickener.

In a more preferred embodiment, the photocurable composition comprises:
- from 0.15 to 0.8 % of at phosphine oxide-based photoinitiator P having a molecular weight higher than or equal to 1 000 g/mol and having the following formula : 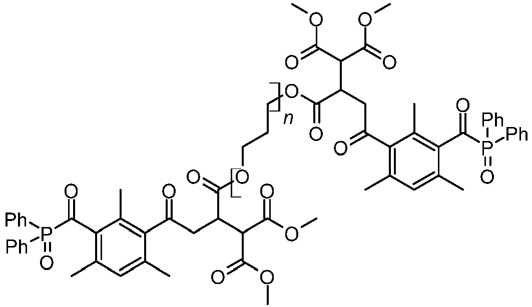 wherein n represents an integer from 1 to 10;
- from 80 to 97% by weight of a cyanoacrylate selected from the group consisting of: 2-methoxyethyl cyanoacrylate, methyl cyanoacrylate, ethyl cyanoacrylate, npropylcyanoacrylate, n-heptylcyanoacrylate, n-octylcyanoacrylate, iso-propylcyanoacrylate, or mixtures thereof;
- from 50 to 500 ppm of a ferrocene compound;
- from 2 to 18 % by weight of a thickener.

The photocurable composition of the invention may be prepared by mixing of the ingredients at 25°C.

The photocurable composition of the invention advantageously exhibits at least one of the following properties:
- resistant to acidic conditions even during prolonged time;
- shelf life stability, preferably exhibiting an increase of viscosity of less than 50% or even less than 30% after 14 days to 21 days at 70°C;
- a fast photocuring time (high curing activities) even after ageing conditions (for examples 14 to 21 days at 70°C), for example less than 5s;
- good adhesive properties;
- less expensive than with other photoinitiator such as TPO, Ivocerin, BAPO, given that photoinitiator P is prepared in a cost-effective manner;
- reduced toxicity issues relative to compositions with classic TPO/BAPO photoinitiators or acyl germane compounds;
- lower tendency to generate migrated compounds once cured, due to use of photoinitiator P having a high molecular weight (i.e. greater than or equal to 500 g/mol, preferably greater than or equal to 1000 g/mol) compared to smaller molecules such as TPO, BAPO;
- implies use of small light intensity to get curing.

### Uses

The present invention also concerns the use of the photocurable composition as defined above for bonding substrates, coating an article or creating a 3D article (3D printing).

The present invention also concerns a method for bonding substrates comprising the steps of:
- applying the photocurable composition as defined herein to at least one of the substrates,
- contacting together the substrates;
- curing of the composition.

The applying to at least one of the substrate may be carried out in any known conventional manner, for example, by spraying, jetting, knife coating, roller coating, casting, drum coating, dipping, and the like and combinations thereof.

The curing is preferably carried out under actinic radiation.

The actinic radiation preferably includes infrared radiation, near-infrared radiation, visible light, UV radiation, electron irradiation (Electron Beam Curing) or X-ray radiation. More preferably, the actinic radiation is a UV radiation.

The actinic radiation source may be any curing lamps known by the skilled person. Preferably, the curing lamp is selected from light-emitting diode, mercury lamp, quartz tungsten halogen light, and Electron-beam lamp.

Preferably, the actinic radiation is carried out with a light-emitting diode UV.

The UV radiation has preferably a wavelength ranging from 100 to 800nm, more preferably from 395 to 600 nm, and even more preferably at 405 nm.

The UV radiation has preferably an irradiance ranging from 3 to 100 mW/cm2.

The substrates may be any kind of substrate. Examples of substrates may be selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The above-mentioned paragraphs can be combined one with each other. For examples, the preferred embodiments for the compositions can be combined all together, and combined with the preferred embodiments of the uses.

The ranges disclosed in this description include both the lower and the upper limit thereof. For example, the expressions "ranging from x to y" or "between x and y" comprises the limits x and y.

### Examples

The following ingredients were used to prepare the compositions:
- PMMA (polymethylmethacrylate): Degalan^{®} LP 50/09 commercialized by Evonik
- MECA (methoxyethyl cyanoacrylate) and ECA (Ethyl Cyanoacrylate) marketed by Crackless Monomer Company;
- Boron Trifluoride Etherate complex: Sigma Aldrich (Merck)
- Ferrocene: Sigma Aldrich (Merck)
- TPO (CAS 75980-60-8), TPO-L (84434-11-7) and BAPO (162881-26-7) sold by TCI
- Omnipol TP sold by IGM resins.

### Example 1: synthesis of photoinitiator P1

### 1a : synthesis of Precursor 1

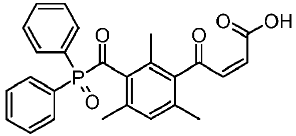

To an ice-cooled solution of 2,4,6-trimethylbenzoyldiphenylphosphine oxide (SpeedCure^{®} TPO from Arkema - 85.0 g, 244 mmol) and maleic anhydride (28.7 g, 293 mmol) in dichloromethane (850 mL) was added aluminium chloride (129 g, 968 mmol) portion-wise over 1 h while maintaining the reaction temperature at 5-10 °C. The resulting deep red solution was heated at 30-32°C for 48 h. The mixture was allowed to cool to 20°C, then was poured into ice water (approx. 1 L) with stirring. Dichloromethane was removed from the biphasic mixture by concentration under reduced pressure, then the resulting aqueous slurry was filtered to obtain the crude solid product. The product was washed repeatedly with water, then was suspended in toluene (500 mL) and filtered. The obtained solid was thoroughly dried in a vacuum oven at 60°C, giving **Precursor 1** as a pale yellow powder (97 g, 89%).

### 1b: Synthesis of Precursor 2

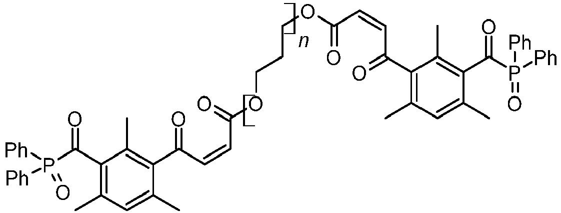

To a suspension of **Precursor 1** (240 g, 538 mmol) and 1,3-poly-propanediol having a number average molecular weight of 200-300 g/mol (Velvetol^{®} H250 from Wey!Chem - 67.3 g, 269 mmol) in toluene (1.4 L) was added methanesulphonic acid (24 mL, 370 mmol) and the resulting mixture was heated at reflux temperature for 5 h, while water was continuously removed using a Dean-Stark apparatus. The mixture was allowed to cool to 20°C, then 5 wt% aqueous sodium carbonate solution (1 L) was added and the layers were separated. The organic phase was washed with water (200 mL) and brine (200 mL), then was dried (MgSO₄), filtered and concentrated under reduced pressure to give **Precursor 2** as a glassy yellow solid (290 g, 97%).

### 1c: Synthesis of Photoinitiator P1

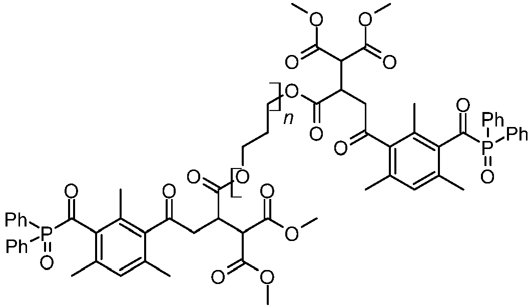

To a solution of **Precursor 2** (186 g, 168 mmol) in toluene (1 L) were added dimethyl malonate (46.4 g, 352 mmol) and potassium carbonate (81.0 g, 586 mmol) and the resulting suspension was heated at 90°C for 2.5 h. The mixture was allowed to cool to 20°C, then 2M hydrochloric acid (1 L) was slowly added as carbon dioxide was evolved. When gas evolution ceased, the layers were mixed well and separated, then the organic phase was washed with water (400 mL) and brine (250 mL). The organic phase was then dried (MgSO₄), filtered and concentrated under reduced pressure to give **Photoinitiator P1** as a glassy, pale-yellow solid (223 g, 97%). Molecular weight of the **Photoinitiator P1** is 1349 g/mol.

### Example 2 : preparation of the compositions

The compositions were prepared by mixing all ingredients except PMMA at 25°C in a light shielded opaque HDPE bottles. PMMA was added portion wise at 60°C. Overall time of mixing was around 90 minutes.

| | % weight | | | | |
|---|---|---|---|---|---|
| ingredient | Composition 1 (invention) | Composition 2 (invention) | Composition 3 (invention) | Composition 4 (comparative) | Composition 5 (comparative) |
| MECA | 93,8725 | 0 | 93,8725 | 93,8725 | 93,8725 |
| ECA | 0 | 91,581 | 0 | 0 | 0 |
| PMMA | 5,6 | 7,9 | 5,6 | 5,6 | 5,6 |
| BF₃-·Et₂O complex | 0,0075 | 0,004 | 0,0075 | 0,0075 | 0,0075 |
| Ferrocene | 0,02 | 0,015 | 0,02 | 0,02 | 0,02 |
| Photoinitiator P1 (molecular weight : 1349 g/mol) | 0,5 | 0,5 | 0 | 0 | 0 |
| TPO (molecular weight 348.4 g/mol) | 0 | 0 | 0 | 0 | 0,5 |
| BAPO | 0 | 0 | 0 | 0,5 | 0 |
| (molecular weight : 418.5 g/mol) | | | | | |
| Omnipol TP (1321 g/mol) | 0 | 0 | 0,5 | 0 | 0 |
| Total | 100% | | | | |

### Example 3 : properties

The following methods were used to assess the performance of the compositions:
The viscosity of compositions was measured at 25°C according to the ASTM D3236 standard and in a Brookfield viscometer DVNext Spindle 52z at 100 rpm.

Photocuring time is the time for a drop of adhesive dispensed on top of PMMA lapshear (from Rocholl) to be tack free (dry to touch) under LED irradiation at 410 nm with 30 mW/cm² irradiance.

The condition of ageing refers to the composition itself (photocurable adhesive, in its container: aluminium tube, for 14 or 21 days at 70°C). The viscosities and photocuring were evaluated on the adhesive at 25°C.

The results are provided in the following table:

| **Composition** | **fresh** | | **14 days at 70°C** | | **21 days at 70°C** | |
|---|---|---|---|---|---|---|
| | **viscosity (mPas)** | **photocuring time (s)** | **viscosity (mPas)** | **photocuring time (s)** | **viscosity (mPas)** | **photocuring time (s)** |
| **composition 1 (invention)** | 156 | 1 | 199 (+28%) | 2 | 200 (+28%) | 3 |
| **composition 2 (invention)** | 154 | 1 | 185 (+20%) | 1 | 216 (+40%) | 1 |
| **composition 3 (invention)** | 170 | 4 | 269 (+58%) | NA | NA | NA |
| **composition 4 (BAPO)** | 208 | 2 | 981 (+372%) | 15 | POLYMERIZED | NA |
| **composition 5 (TPO)** | 240 | 1 | 780 (+225%) | 2 | POLYMERIZED | NA |

| | | | | | | |
|---|---|---|---|---|---|---|
| *NA : not assessed* | | | | | | |

According to the results, the composition 1 according to the invention which comprises the photoinitiator P (phosphine-oxide based photoinitiator with molecular weight of around 1349 g/mol) is advantageously stable with time. After ageing for 14 days at 70°C, the viscosity is practically constant (less than 30% increase), and even after 21 days. Composition 3 with Omnipol TP (molecular weight of 1321 g/mol) allows a moderate increase in viscosity (58%). On the contrary, the comparative compositions 4 and 5, with BAPO or TPO which have a molecular weight of respectively 418 g/mol and 348 g/mol, are not stable with time. Indeed, the viscosity increased around four times after ageing at 70°C for 14 days, and the compositions had even polymerized after 21 days at 70°C.

In addition, the composition 1 according to the invention advantageously leads to a photocuring time of only 3 s after ageing at 70°C for 21 days, while comparative composition 3 with BAPO exhibits a high photocuring time at 70°C for 14 days (15 s).

## Claims

1. Photocurable composition comprising:
- a phosphine oxide-based photoinitiator P having a molecular weight higher than or equal to 500 g/mol;
- a cyanoacrylate; and
- a metallocene compound.

2. Photocurable composition according to claim 1, wherein the cyanoacrylate is selected from the group consisting of:
- monomers of structure (I) 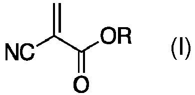 wherein R may be selected from the group consisting of an alkyl group, an alkoxyalkyl group, a trimethylsilylated C1-C3 alkyl group, a cycloalkyl group, an allyl group, an aralkyl group, an aryl group, a haloalkyl group;
- monomers of structure (II): 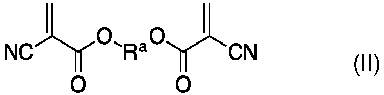 wherein R^{a} is selected from the group consisting of -(CH₂)ₙ with n = 2 to 12, - CH₂(C(CH₃)₂CH₂)-, -CH(CH₃)CH₂CH₂CH(CH₃)-, -CH₂C₆H₄CH₂- including 1,3- or 1,4-disubstituted aromatic), -(CH₂)₄O(CH₂)₄-, -CH₂(CF₂)₃CH₂-, -CH₂Si(CH₃)₂OSi(CH₃)₂CH₂-, -CH₂CH=CHCH₂- or -CH₂C=CCH₂-;
- monomers of structure (III) 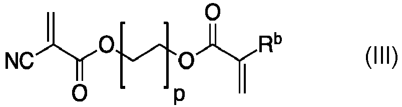 wherein R^{b} is -H or -CH₃; and wherein p is 1;
- monomers of structure (IV): 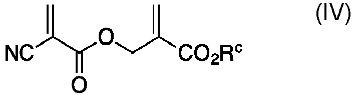 wherein R^{c} is -CH₃ or -C₂H₅;
and
- mixtures thereof.

3. Photocurable composition according to anyone of claim 1 or 2, wherein it comprises from 60% to 99.5% by weight of cyanoacrylate(s), more preferably from 70% to 99% by weight of cyanoacrylate(s), and even more preferably from 80% to 99% by weight of cyanoacrylate(s) based on the total weight of the photocurable composition.

4. Photocurable composition according to anyone of claims 1 to 3, wherein the phosphine oxide-based photoinitiator P has a molecular weight higher than or equal to 1 000 g/mol.

5. Photocurable composition according to anyone of claims 1 to 4, wherein the phosphine oxide-based photoinitiator P has a molecular weight higher than or equal to 1 000 g/mol, and lower than or equal to 3 000 g/mol.

6. Photocurable composition according to anyone of claims 1 to 5, wherein the phosphine oxide-based photoinitiator P has one of formula (1) or (1') 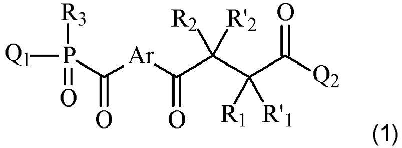 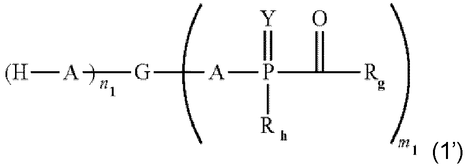 wherein:
- each Ar is independently an optionally substituted arylene;
- R₁ and R₂ are independently H or an optionally substituted group selected from alkyl and aryl; or R₁ and R₂, together with the carbon atoms to which they are attached, form a ring;
- one of R'₁ and R'₂ is H and the other of R'₁ and R'₂ is selected from -OR⁴, -SR⁵, -NR⁶R⁷, - C(R^{$})(CO-W'-R⁹)(CO-VV^{z}-R'°), -C(R¹¹)(CO-W³-R¹²)(CN) and -C(R¹³)(CN)₂; or R'₂ is H and R'₁ and Q₂, together with the atoms to which they are attached, form a 5-7 membered ring;
- each R₃ is independently an optionally substituted group selected from alkyl, aryl and alkoxy;
- R⁴, R⁵, R⁶ and R⁷ are independently H or an optionally substituted group selected from alkyl, a polyoxyalkylene, cycloalkyl, heterocycloalkyl, aryl and heteroaryl; or R⁶ and R⁷, together with the nitrogen atom to which they are attached, form a 5-7 membered ring;
- R⁸, R¹¹ and R¹³ are independently H or an optionally substituted alkyl group, preferably H;
- R⁹, R¹⁰ and R¹² are independently an optionally substituted group selected from alkyl, cycloalkyl, heterocycloalkyl, aryl and heteroaryl, or R⁹ and R¹⁰, together with the atoms to which they are attached, form a 5-7 membered ring,
- W¹, W² and VV³ are independently selected from a bond or an oxygen atom;
- Q₁ is an optionally substituted aryl or a group of formula (3): 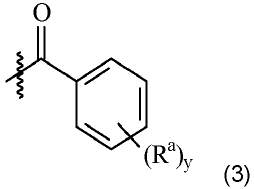 wherein:
- each R^{a} is independently an optionally substituted group selected from alkyl, aryl, alkoxy, aryloxy, thioalkyl and thioaryl; and
- y is a number chosen from 0 to 5;
- Q₂ is -OR¹⁴, -SR¹⁵, -NR¹⁶R¹⁷, -O-[CH₂-CH(OH)-Y₁]ₐ-Z¹, -S-Z², -N(R¹⁸)-Z³ or -O-Cyhex-Y₂-Z⁴; or Q₂ and R'₁, together with the atoms to which they are attached, form a 5-7 membered ring;
- R¹⁴ and R¹⁵ are independently H or an optionally substituted group selected from alkyl, cycloalkyl, heterocycloalkyl, aryl and heteroaryl;
- R¹⁶, R¹⁷ and R¹⁸ are independently H, or an optionally substituted group selected from alkyl and aryl; or R¹⁶ and R¹⁷, together with the nitrogen atom to which they are attached, form a 5-7 membered ring;
- Cyhex is a cycloyhexylene substituted by a hydroxyl group, preferably represented by the following formula: 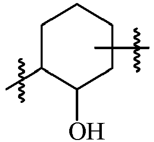
- Y₁ is a bond, -CH₂-O-* or -CH₂-C(=O)-O-*;
- Y₂ is a bond, -CH₂-O-C(=O))-^{#} or -C(=O)-O-^{#};
- a is 0 or 1;
- Z¹, Z², Z³ and Z⁴ are independently a phosphine oxide-containing moiety;
- the symbol * represents a point of attachment to moiety Z¹;
- the symbol * represents a point of attachment to moiety Z⁴;
- each A represents independently of one another O, S, NRₓ;
- Rₓ is hydrogen or C1-C4 alkyl;
- G is a residue of the multifunctional compound (core) G-(A-H)ₙ₁₊ₘ₁, wherein each A-H represents a alcoholic or amino or thiol group;
- n₁ and m₁ are both integer numbers and n₁+m₁ is comprised between 3 and 10; m₁ is comprised between 3 and 8;
- R_{g}, Rₕ are independently of one another, C1-C18 alkyl, C5-C12 aryl and C5-C12 cycloalkyl, each of which is uninterrupted or interrupted by one or more oxygen and/or sulfur atoms and/or one or more substituted or unsubstituted imino groups, or are a five- to six-membered heterocyclic radical containing oxygen and/or nitrogen and/or sulfur atoms, where each of said radicals may be substituted by aryl, alkyl, aryloxy, alkoxy, heteroatoms and/or heterocyclic radicals;
- Rₕ may also be R_{g}-(C=O)- ;
- YisO;
with the proviso that photoinitiator of formula (1') does not contain photocurable ethylenically unsaturated groups.

7. Photocurable composition according to anyone of claims 1 to 6, wherein the photoinitiator P has formula (1).

8. Photocurable composition according to anyone of claims 6 or 7, wherein each Ar is independently an optionally substituted phenylene, preferably a meta-phenylene substituted by one or more optionally substituted groups selected from alkyl, aryl, alkoxy, aryloxy, thioalkyl and thioaryl; and more preferably Ar is a group of formula (2):

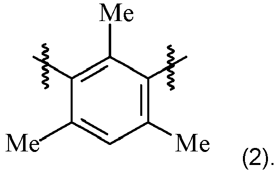

9. Photocurable composition according to anyone of claims 6 to 8, wherein:
- Q₁ is phenyl; and/or
- R₁ and R₂ are both H; and/or
- one of R'₁ and R'₂ is H and the other of R'₁ and R'₂ is -C(R⁸)(CO-W¹-R⁹)(CO-W²-R¹⁰), and wherein preferably:
∘ R⁸ is H;
∘ W¹ and W² are independently a bond or an oxygen atom; and
∘ R⁹ and R¹⁰ are independently an optionally substituted alkyl;
and/or
- Q₂ is -O-[CH₂-CH(OH)-Y₁]ₐ-Z¹, wherein Z¹ is a group of formula (5); 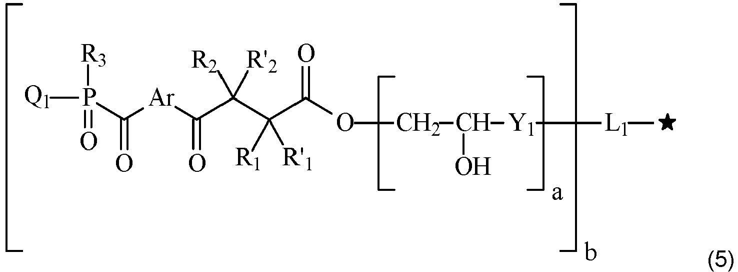 wherein:
- Ar, Y₁, R₁, R₂, R'₁, R'₂, R₃, Q₁ and a are as defined in anyone of claims 6 to 9;
- L₁ is a linker; and
- b is a number chosen from 1 to 15.

10. Photocurable composition according to claim 9, wherein each linker L₁, L₂, L₃ and L₄ may independently be selected from:
- a trivalent moiety corresponding to formula (9): 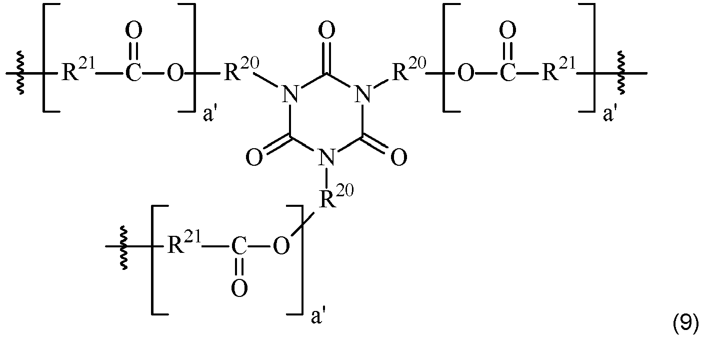 wherein:
- R²⁰ and R²¹ are independently a linear or branched alkylene;
- a' is an integer equal to 0 or 1;
- a trivalent moiety corresponding to formula (10): 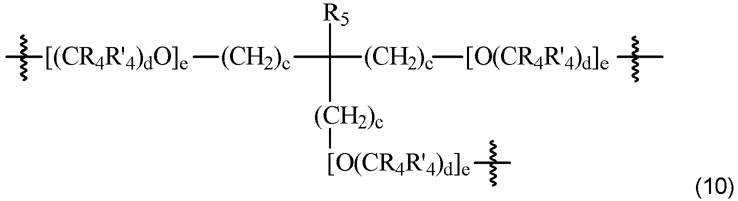 wherein:
- R₄ and R'₄ are independently H or methyl;
- R₅ is H, alkyl or alkoxy, preferably R₅ is alkyl;
- each c is independently an integer from 0 to 2 with the proviso that not more than one c is equal to 0, preferably each c is equal to 1 or one c is equal to 0 and the two other c are equal to 1;
- each d is independently an integer from 2 to 4, in particular 2;
- each e is independently an integer from 0 to 10, in particular from 1 to 6;
- a trivalent moiety according to formula (11): 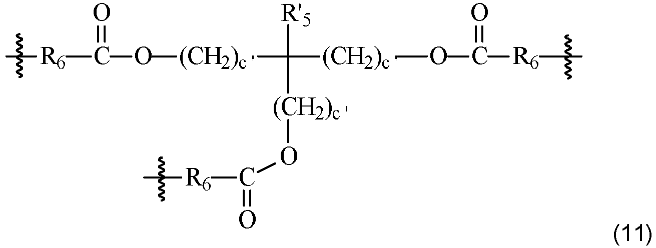 wherein :
- R'₅ is H, alkyl or alkoxy, preferably R'₅ is alkyl;
- each R₆ is independently a linear or branched alkylene;
- each c' is independently an integer from 0 to 2 with the proviso that not more than one c' is equal to 0, preferably each c' is equal to 1 or one c' is equal to 0 and the two other c' are equal to 1;
- a trivalent moiety according to formula (12a), (12b) or (12c): 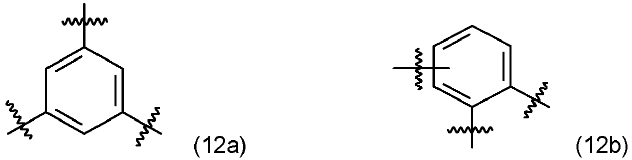 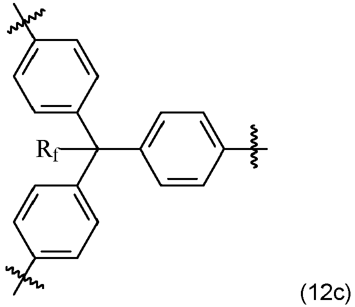 wherein R_{f} is H or methyl;
- a tetravalent moiety according to formula (13a) or (13b): 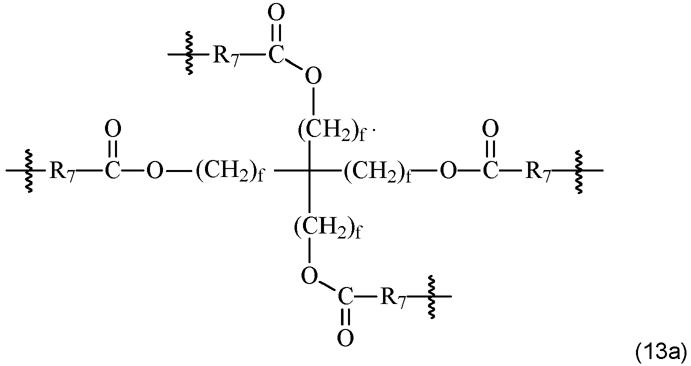 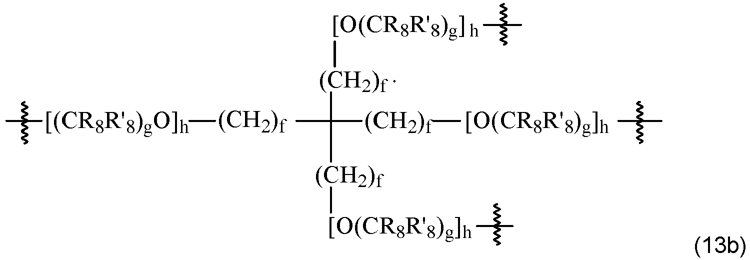 wherein:
- each R₇ is independently a linear or branched alkylene;
- R₈ and R'₈ are independently H or methyl;
- each f is independently an integer from 0 to 2 with the proviso that not more than one f is equal to 0, preferably each f is equal to 1;
- each g is independently an integer from 2 to 4, in particular 2;
- each h is independently an integer from 0 to 10, in particular from 1 to 6;
- a tetravalent moiety according to formula (14): 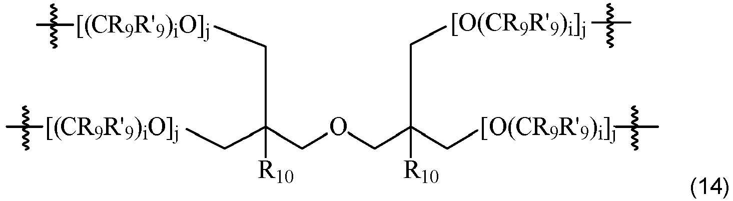 wherein
- R₉ and R'₉ are independently H or methyl;
- each R₁₀ is independently H, alkyl or alkoxy, preferably R₁₀ is alkyl;
- each i is independently an integer from 2 to 4, in particular 2;
- each j is independently an integer from 0 to 10, in particular from 1 to 6;
- a tetra-, penta- or hexavalent moiety according to formula (15): 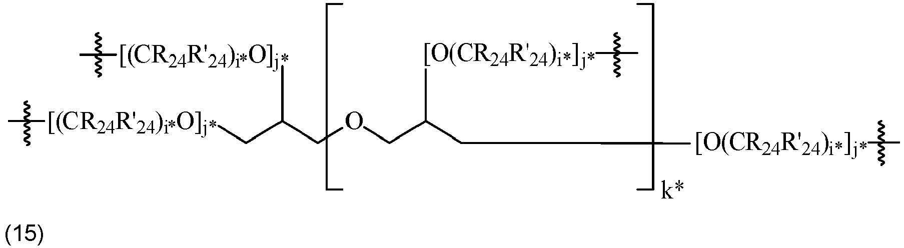 wherein:
- R₂₄ and R'₂₄ are independently H or methyl;
- each i* is independently an integer from 2 to 4, in particular 2;
- each j* is independently an integer from 0 to 10, in particular from 1 to 6;
- k' is an integer from 1 to 3;
- a hexavalent moiety according to formula (16): 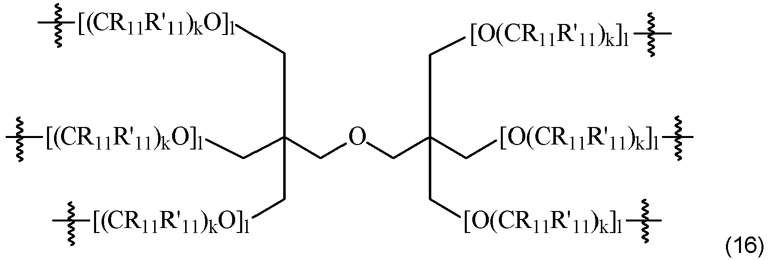 wherein
- R₁₁ and R'₁₁ are independently H or methyl;;
- each k is independently an integer from 2 to 4, in particular 2;
- each I is independently an integer from 0 to 10, in particular from 1 to 6;
- a hexavalent moiety according to formula (17): 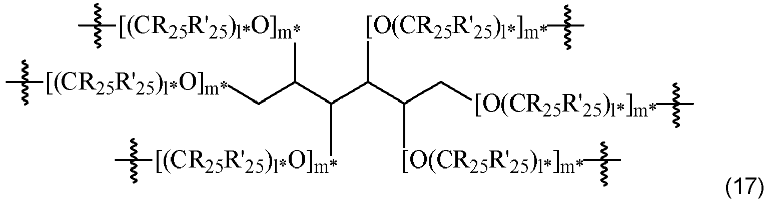 wherein:
- R₂₅ and R'₂₅ are independently H or methyl;
- each I* is independently an integer from 2 to 4, in particular 2;
- each m* is independently an integer from 0 to 10, in particular from 1 to 6;
- a divalent moiety according to one of formulae (20) to (28):
-(CR₁₂R'₁₂)ₘ- (20)
-[(CR₁₃R'₁₃)ₙ-O]ₒ-(CR₁₃R'₁₃)ₙ- (21)
-[(CR₁₄R'₁₄)ₚ-Ol_{q}-(CR₁₅R'₁₅)ᵣ-[O-(CR₁₄R'₁₄)ₚ]_{q}- (22)
-[(CR₁₆R'₁₆)ₛ-C(=O)O]ₜ-(CR₁₇R'₁₇)ᵤ- (23a)
-(CR₁₇R'₁₇)ᵤ-[(CR₁₆R'₁₆)ₛ-C(=O)O]ₜ- (23b)
-[(CR₁₈R'₁₈)ᵥ-O-C(=O)-(CR₁₉R'₁₉)_{w}-C(=O)-O]ₓ-(CR₁₈R'₁₈)ᵥ- (24)
-[(CR₂₀R'₂₀)_{y}-S]_{z}-(CR₂₀R'₂₀)_{y}- (25)
-(CR₂₁R'₂₁)_{m'}-C(=O)-O-(CR₂₂R'₂₂)_{n'}-O-C(=O)-(CR₂₁R'₂₁)_{m'}- (26)
-(CR₂₃R'₂₃)_{m"}-Cy-[L-Cy]_{n"}-(CR₂₃R'₂₃)_{m"}- (27) 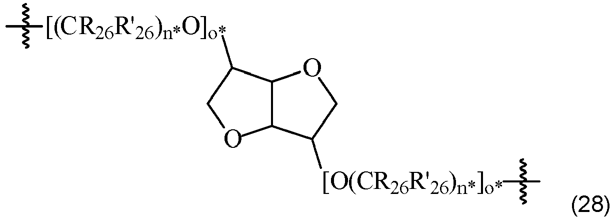
wherein:
- R₁₂, R'₁₂, R₁₅, R'₁₅, R₁₇, R'₁₇, R₁₈, R'₁₈, R₁₉, R'₁₉, R₂₁, R'₂₁, R₂₂, R'₂₂, R₂₃ and R'₂₃ are independently H or alkyl;
- R₁₃, R'₁₃, R₁₄, R'₁₄, R₁₆, R'₁₆, R₂₀, R'₂₀, R₂₆ and R'₂₆ are independently H or methyl;
- Cy is an optionally substituted ring, in particular an optionally substituted cyclohexylene or phenylene;
- L is a bond or a linker such as Alk, -C(=O)-, -C(=O)-O-Alk-O-C(=O)-, -SO-, - SO₂-, -C(=CCl₂)- and -Alk-Ph-Alk-;
- Alk is an optionally substituted alkylene;
- Ph is an optionally substituted phenylene;
- m, n', r, v, u and w are independently an integer from 2 to 20;
- each m" is independently an integer from 0 to 20;
- n, n*, p and y are independently an integer from 2 to 4;
- n" is an integer equal to 0 or 1;
- m', o, t, x and z are independently an integer from 1 to 20;
- each o* is independently an integer from 0 to 10, in particular from 1 to 6.
- each q is independently an integer from 0 to 20 with the proviso that at least one q is not 0;
- s is an integer from 3 to 12.
preferably L₁, L₂ and L₃ are independently a divalent linker selected from an alkylene group such as 1,3-propanediyl, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated derivative of the aforementioned alkylenes, preferably an ethoxylated and/or propoxylated derivative of the aforementioned alkylenes; an esterified, preferably by ring-opening polymerization of a lactone such as ε-caprolactone, derivative of the aforementioned alkylenes; a residue of a di-, tri-, tetra- or polyoxyalkene without the hydroxy groups such as di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol).

11. Photocurable composition according to anyone of claims 1 to 10, wherein the photoinitator P is one of the following list: 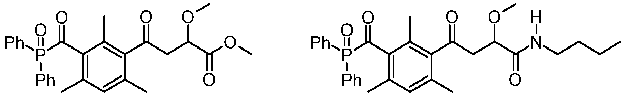 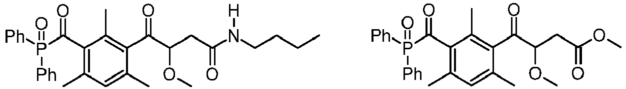 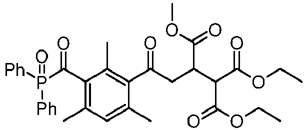 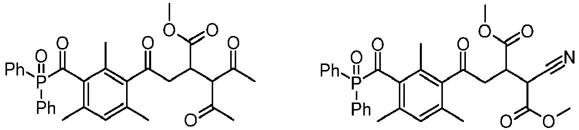 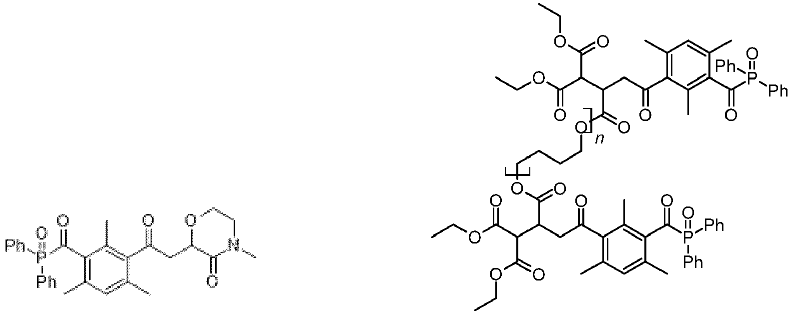 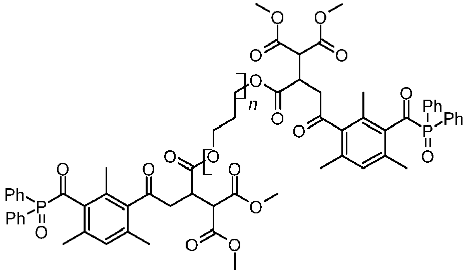 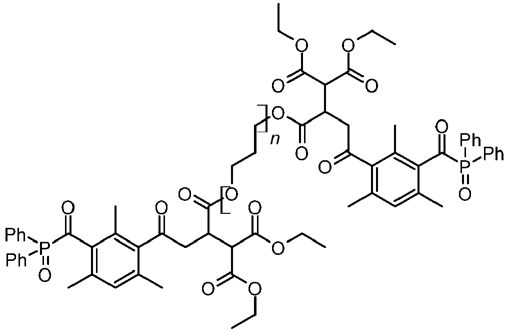 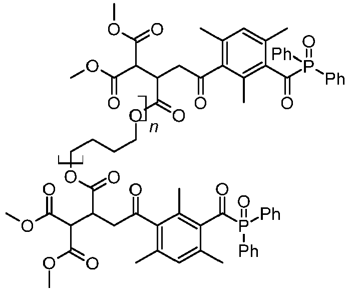 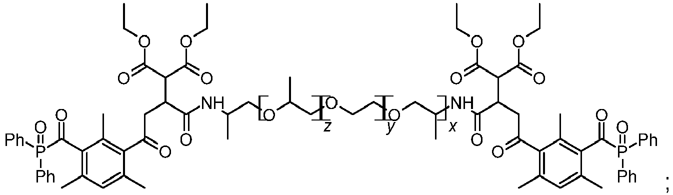 and isomers thereof;
wherein each a, b, c, n, x, y and z independently represents an integer from 1 to 50, preferably from 1 to 20.

12. Photocurable composition according to anyone of claims 1 to 11, wherein the photoinitator P is: 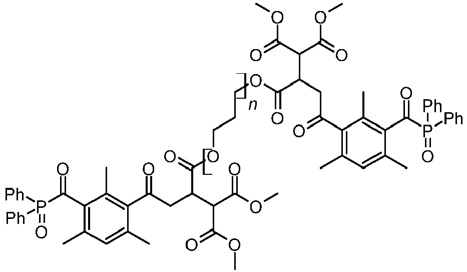 wherein n represents an integer from 1 to 50, preferably from 1 to 20, more preferably from 1 to 10.

13. Photocurable composition according to anyone of claims 1 to 12, **characterized in that** it does not comprise other photoinitiator than the photoinitiator P.

14. Photocurable composition according to anyone of claims 1 to 13, **characterized in that** it comprises at least one thickener, preferably selected from the group consisting of vinyl acetate copolymers, poly(meth)acrylates, ethylene-acrylic copolymers, and mixtures thereof.

15. Photocurable composition according to anyone of claims 1 to 14, **characterized in that** it is substantially free of photopolymerizable monomers other than cyanoacrylate.

16. Photocurable composition according to anyone of claims 1 to 15, **characterized in that** it comprises:
- from 0.05 to 5% of at phosphine oxide-based photoinitiator P as defined in anyone of claims 1 to 14;
- from 60 to 99.5% by weight of a cyanoacrylate;
- from 50 to 500 ppm of a ferrocene compound;
- from 2 to 18 % by weight of a thickener.

17. Photocurable composition according to anyone of claims 1 to 16, **characterized in that** it comprises:
- from 0.15 to 0.8 % of at phosphine oxide-based photoinitiator P having a molecular weight higher than or equal to 1 000 g/mol and having the following formula : 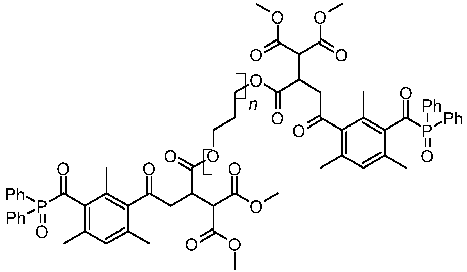 wherein n represents an integer from 1 to 10;
- from 80 to 97% by weight of a cyanoacrylate selected from the group consisting of: 2-methoxyethyl cyanoacrylate, methyl cyanoacrylate, ethyl cyanoacrylate, npropylcyanoacrylate, n-heptylcyanoacrylate, n-octylcyanoacrylate, iso-propylcyanoacrylate, or mixtures thereof;
- from 50 to 500 ppm of a ferrocene compound;
- from 2 to 18 % by weight of a thickener.

18. Use of the photocurable composition according to anyone of claims 1 to 17 for bonding substrates, coating an article or creating a 3D article (3D printing).

19. Method for bonding substrates comprising the steps of:
- applying the photocurable composition as defined in anyone of claims 1 to 17 to at least one of the substrates,
- contacting together the substrates;
- curing of the composition.
